Europäisches Patentamt

European Patent Office

Office européen des brevets

(19)

(11) **EP 1 217 863 A2**

(12) **EUROPEAN PATENT APPLICATION**

(43) Date of publication:
**26.06.2002 Bulletin 2002/26**

(51) Int Cl.⁷: **H04Q 11/00**

(21) Application number: **01129348.7**

(22) Date of filing: **17.12.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **22.12.2000 US 257884**<br>**22.12.2000 US 257382**<br><br>(71) Applicant: **Alcatel USA Sourcing, L.P.**<br>**Plano, Texas 75075 (US)** | (72) Inventors:<br>• **Zheng, Si Q.**<br>**Plano, Texas 75083 (US)**<br>• **Xiong, Yijun**<br>**Plano, Texas 75025 (US)**<br>• **Sakalian, Steve Y.**<br>**Richardson, Texas 75082 (US)**<br><br>(74) Representative:<br>**Dreiss, Fuhlendorf, Steimle & Becker**<br>**Patentanwälte**<br>**Postfach 10 37 62**<br>**70032 Stuttgart (DE)** |

(54) **Unified associative memory of data channel schedulers in an optical router**

(57)    An optical switch network (4) includes optical routers (10), which route information in optical fibers (12). Each fiber carries a plurality of data channels (20), collectively a data channel group (14), and a control channel (16). Data is carried on the data channels in data bursts and control information is carried on the control channel (18) in burst header packets. A burst header packet includes routing information for an associated data burst (28) and precedes its associated data burst. Parallel scheduling at multiple delays may be used for faster scheduling. In one embodiment, unscheduled times and gaps may be processed in a unified memory for more efficient operation.

*FIG. 1a*

FIG. 1b

**Description**

CROSS-REFERENCE TO RELATED APPLICATIONS

This application claims the benefit of the filing date of copending provisional application U.S. Ser. No. 60/257,884, filed December 22, 2000, entitled "Unified Associative Memory of Data Channel Schedulers in an Optical Router" to Zheng et al.

BACKGROUND OF THE INVENTION

1. TECHNICAL FIELD

This invention relates in general to telecommunications and, more particularly, to a method and apparatus for optical switching.

2. DESCRIPTION OF THE RELATED ART

Data traffic over networks, particularly the Internet, has increased dramatically recently, and will continue as the user increase and new services requiring more bandwidth are introduced. The increase in Internet traffic requires a network with high capacity routers capable of routing data packets of variable length. One option is the use of optical networks.

The emergence of dense-wavelength division multiplexing (DWDM) technology has improved the bandwidth problem by increasing the capacity of an optical fiber. However, the increased capacity creates a serious mismatch with current electronic switching technologies that are capable of switching data rates up to a few gigabits per second, as opposed to the multiple terabit per second capability of DWDM. While emerging ATM switches and IP routers can be used to switch data using the individual channels within a fiber, typically at a few hundred gigabits per second, this approach implies that tens or hundreds of switch interfaces must be used to terminate a single DWDM fiber with a large number of channels. This could lead to a significant loss of statistical multiplexing efficiency when the parallel channels are used simply as a collection of independent links, rather than as a shared resource.

Different approaches advocating the use of optical technology in place of electronics in switching systems have been proposed; however, the limitations of optical component technology has largely limited optical switching to facility management/control applications. One approach, called optical burst-switched networking, attempts to make the best use of optical and electronic switching technologies. The electronics provides dynamic control of system resources by assigning individual user data bursts to channels of a DWDM fiber, while optical technology is used to switch the user data channels entirely in the optical domain.

Previous optical networks designed to directly handle end-to-end user data channels have been disappointing.

Therefore, a need has arisen for a method and apparatus for providing an optical burst-switched network.

BRIEF SUMMARY OF THE INVENTION

In the present invention, an optical burst-switched router comprises an optical switch for routing optical information from an incoming optical transmission medium to one of a plurality of outgoing optical transmission media, each outgoing media able to transmit optical information over a plurality of channels. A delay buffer is coupled to the optical switch for providing a plurality of different delays for delaying selected information between the incoming transmission medium and one of the outgoing optical transmission media. Scheduling circuitry is associated with each respective outgoing medium, comprising an associative processor for storing information on both unscheduled time for each channel and time gaps on each channel on the respective outgoing medium.

The present invention provides an efficient architecture for identifying unscheduled time and time gaps within which a data burst can be scheduled.

BRIEF DESCRIPTION OF THE SEVERAL VIEWS OF THE DRAWINGS

For a more complete understanding of the present invention, and the advantages thereof, reference is now made to the following descriptions taken in conjunction with the accompanying drawings, in which:

Figure 1a is a block diagram of an optical network;

Figure 1b is a block diagram of a core optical router;

Figure 2 illustrates a data flow of the scheduling process;

Figure 3 illustrates a block diagram of a scheduler;

Figures 4a and 4b illustrate timing diagrams of the arrival of a burst header packet relative to a data burst;

Figure 5 illustrates a block diagram of a DCS module;

Figure 6 illustrates a block diagram of the associative memory of $P_M$;

Figure 7 illustrates a block diagram of the associative memory of $P_G$;

Figure 8 illustrates a flow chart of a LAUC-VF scheduling method;

Figure 9 illustrates a block diagram of a CCS module;

Figure 10 illustrates a block diagram of the associative memory of $P_T$;

Figure 11 illustrates a flow chart of a constrained earliest time method of scheduling the control channel;

Figure 12 illustrates a block diagram of the path & channel selector;

Figure 13 illustrates a example of a blocked output channel through the recirculation buffer;

Figure 14 illustrates a memory configuration for a memory of the BHP transmission module;

Figure 15 illustrates a block diagram of an optical router architecture using passive FDL loops;

Figure 16 illustrates an example of a path & channel scheduler with multiple $P_M$ and $P_G$ pairs;

Figures 17a and 17b illustrate timing diagram of outbound data channels;

Figure 18 illustrates clock signals for $CLK_f$ and $CLK_s$;

Figure 19a and 19b illustrate alternative hardware modifications for slotted operation of a router;

Figure 20 illustrates a block diagram of an associative processor $P_M$;

Figure 21 illustrates a block diagram of an associative processor $P_G$;

Figure 22 illustrates a block diagram of an associative processor $P_{MG}$;

Figure 23 illustrates a block diagram of an associative processor $P^*_{MG}$;

Figure 24 illustrates a block diagram of an embodiment using multiple associative processors for fast scheduling;

Figure 25 illustrates a block diagram of a processor $P_{M-ext}$ for use with multiple channel groups; and

Figure 26 illustrates a block diagram of a processor $P_{G-ext}$ for use with multiple channel groups.

DETAILED DESCRIPTION OF THE INVENTION

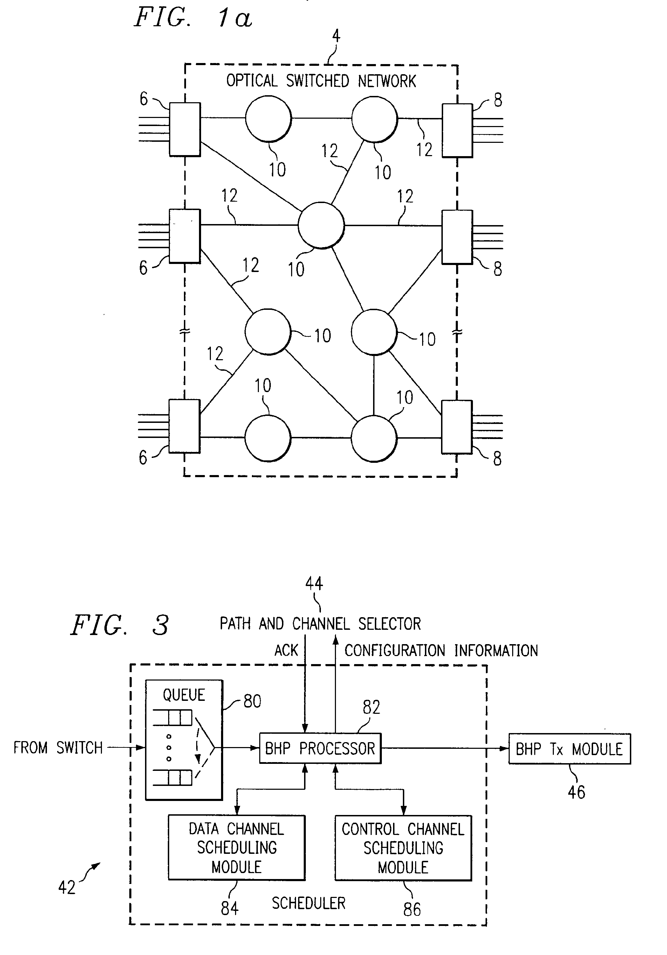

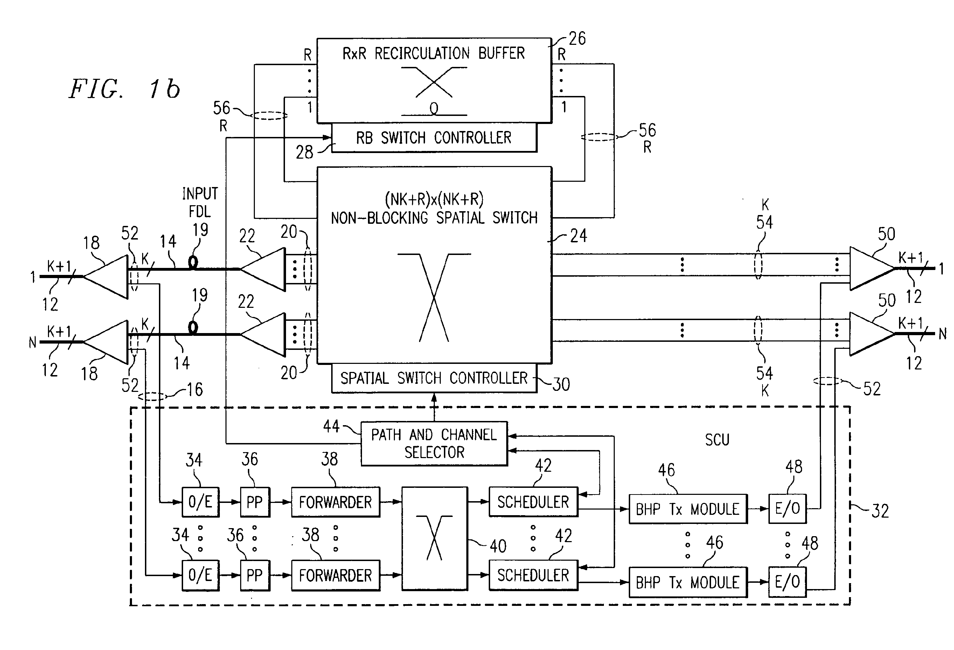

The present invention is best understood in relation to Figures 1 - 26 of the drawings, like numerals being used for like elements of the various drawings.

Figure 1a illustrates a general block diagram of an optical burst switched network 4. The optical burst switched (OBS) network 4 includes multiple electronic ingress edge routers 6 and multiple egress edge routers 8. The ingress edge routers 6 and egress edge routers 8 are coupled to multiple core optical routers 10. The connections between ingress edge routers 6, egress edge routers 8 and core routers 10 are made using optical links 12. Each optical fiber can carry multiple channels of optical data.

In operation, a data burst (or simply "burst") of optical data is the basic data block to be transferred through the network 4. Ingress edge routers 6 and egress edge routers 8 are responsible for burst assembly and disassembly functions, and serve as legacy interfaces between the optical burst switched network 4 and conventional electronic routers.

Within the optical burst switched network 4, the basic data block to be transferred is a burst, which is a collection of packets having some common attributes. A burst consists of a burst payload (called "data burst") and a burst header (called "burst header packet" or BHP). An intrinsic feature of the optical burst switched network is that a data burst and its BHP are transmitted on different channels and switched in optical and electronic domains, respectively, at each network node. The BHP is sent ahead of its associated data burst with an offset time $\tau$ ($\geq 0$). Its initial value, $\tau_0$, is set by the (electronic) ingress edge router 8.

In this invention, a "channel" is defined as a certain unidirectional transmission capacity (in bits per second) between two adjacent routers. A channel may consist of one wavelength or a portion of a wavelength (e.g., when time-division multiplexing is used). Channels carrying data bursts are called "data channels", and channels carrying BHPs and other control packets are called "control channels". A "channel group" is a set of channels with a common type and node adjacency. A link is defined as a total transmission capacity between two routers, which usually consists of a "data channel group" (DCG) and a "control channel group" (CCG) in each direction.

Figure 1b illustrates a block diagram of a core optical router 10. The incoming DCG 14 is separated from the CCG 16 for each fiber 12 by demultiplexer 18. Each DCG 14 is delayed by a fiber delay line (FDL) 19. The delayed DCG is separated into channels 20 by demultiplexer 22. Each channel 20 is input to a respective input node on a non-blocking spatial switch 24. Additional input and output nodes of spatial switch 24 are coupled to a recirculation buffer (RB) 26. Recirculation buffer 26 is controlled by a recirculation switch controller 28. Spatial switch 24 is controlled by a spatial switch controller 30.

CCGs 14 are coupled to a switch control unit (SCU) 32. SCU includes an optical/electronic transceiver 34 for each CCG 14. The optical/electronic transceiver 34 receives the optical CCG control information and converts the optical information into electronic signals. The electronic CCG information is received by a packet processor 36, which passes information to a forwarder 38. The forwarder for each CCG is coupled to a switch 40. The output nodes of switch 40 are coupled to respective schedulers 42. Schedulers 42 are coupled to a Path & Channel Selector 44 and to respective BHP transmit modules 46. The BHP transmit modules 46 are coupled to electronic/optical transceivers 48. The electronic/optical transceivers produce the output CCG 52 to be combined with the respective output DCG 54 information by multiplexer 50. Path & channel selector 44 is also coupled to RB switch controller 28 and spatial switch controller 30.

The embodiment shown in Figure 1b has $N$ input DCG-CCG pairs and $N$ output DCG-CCG pairs 52, where each DCG has $K$ channels and each CCG has only one channel ($k=1$). A DCG-CCG pair 52 is carried in one fiber. In general, the optical router could be asymmetric, the number of channels $k$ of a CCG 16 could be larger than one, and a DCG-CCG pair 52 could be carried in more than one fiber 12. In the illustrated embodiment, there is one buffer channel group (BCG) 56 with $R$ buffer channels. In general, there could be more than one BCG 56. The optical switching matrix (OSM) consists of a $(NK+R)x(NK+R)$ spatial switch and a $RxR$ switch with WDM (wavelength division multiplexing) FDL buffer serving as recirculation buffer (RB) 26 to resolve data burst contentions on outgoing data channels. The spatial switch is a strictly non-blocking switch, meaning that an arriving data burst on an incoming data channel can be switched to any idle outgoing data channel. The delay $\Delta$ introduced by the input FDL 19 should be sufficiently long such that the SCU 32 has enough time to process a BHP before its associated data burst enters the spatial switch.

The $RxR$ RB switch is a broadcast-and-select type switch of the type described in P. Gambini, et al., "Transparent Optical Packet Switching Network Architecture and Demonstrators in the KEOPS Project", *IEEE J. Selected Areas in Communications,* vol. 16, no. 7, pp. 1245-1259, Sept. 1998. It is assumed that the $RxR$ RB switch has $B$ FDLs with the $i$th FDL introducing $Q_i$ delay time, $1 \leq i \leq B$. It is further assumed without loss of generality that $Q_1 < Q_2 <...< Q_B$ and $Q_0 = 0$, meaning no FDL buffer is used. Note that the FDL buffer is shared by all N input DCGs and each FDL contains $R$ channels. A data burst entering the RB switch on any incoming channel can be delayed by one of $B$ delay times provided. The recirculation buffer in Figure 1b can be degenerated to passive FDL loops by removing the function of RB switch, as shown in Figure 15, wherein different buffer channels may have different delays.

The SCU is partially based on an electronic router. In Figure 1b, the SCU has $N$ input control channels and $N$ output control channels. The SCU mainly consists of packet processors (PPs) 36, forwarders 38, a switching fabric 40, schedulers 42, BHP transmission modules 46, a path & channel selector 44, a spatial switch controller 30, and a RB switch controller 28. The packet processor 36, the forwarders 38, and the switching fabric 40 can be found in electronic routers. The other components, especially the scheduler, are new to optical routers. The design of the SCU uses the distributed control as much as possible, except the control to the access of shared FDL buffer which is centralized.

The packet processor performs layer 1 and layer 2 decapsulation functions and attaches a time-stamp to each arriving BHP, which records the arrival time of the associated data burst to the OSM. The time-stamp is the sum of the BHP arrival time, the burst offset-time $\tau$ carried by the BHP and the delay $\Delta$ introduced by input FDL 19. The forwarder mainly performs the forwarding table lookup to decide which outgoing CCG 52 to forward the BHP. The associated data burst will be switched to the corresponding DCG 54. The forwarding can be done in a connectionless or connection-oriented manner.

There is one scheduler for each DCG-CCG pair 52. The scheduler 42 schedules the switching of the data burst on a data channel of the outgoing DCG 54 based on the information carried by the BHP. If a free data channel is found, the scheduler 42 will then schedule the transmission of the BHP on the outgoing control channel, trying to "resynchronize" the BHP and its associated data burst by keeping the offset time $\tau$ ($\geq 0$) as close as possible to $\tau_0$. After both the data burst and BHP are successfully scheduled, the scheduler 42 will send the configuration information to the spatial switch controller 30 if it is not necessary to provide a delay through the recirculation buffer 26, otherwise it will also send the configuration information to the RB switch controller 28.

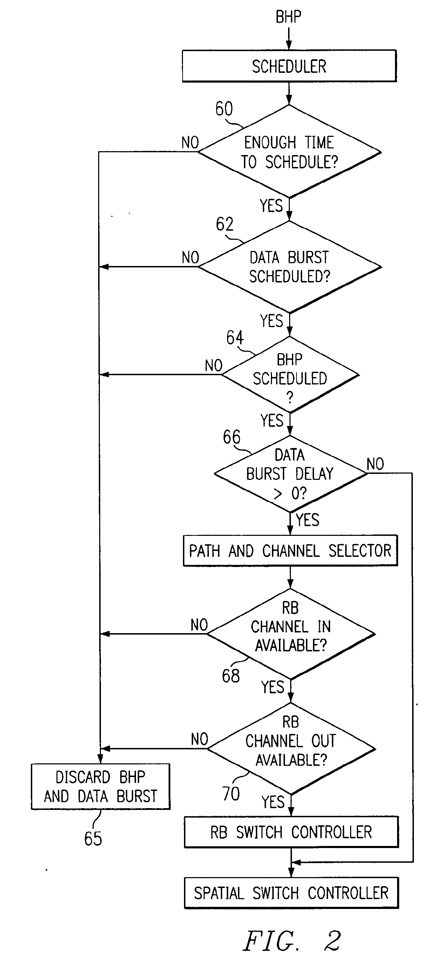

The data flow of scheduling decision process is shown in Figure 2. In decision block 60, the scheduler 42 determines whether or not there is enough time to schedule an incoming data burst. If so, the scheduler determines whether the data burst can be scheduled, i.e., whether there is an unoccupied space in the specified output DCG 54 for the data burst. In order to schedule the data burst, there must be an available space to accommodate the data burst in the specified output DCG. This space may start within a time window beginning at the point of arrival of the data burst at the spatial switch 24 extending to the maximum delay which can be provided by the recirculation buffer 26. If the data burst can be scheduled, then the scheduler 42 must determine whether there is a space available in the output CCG 52 for the BHP in decision block 64.

If any of the decisions in decision blocks 60, 62 or 64 are negative, the data burst and BHP are dropped in block 65. If all of the decisions in decision blocks 60, 62 and 64 are positive, the scheduler sends the scheduling information to the path and channel selector 44. The configuration information from scheduler to path & channel selector includes incoming DCG identifier, incoming data channel identifier, outgoing DCG identifier, outgoing data channel identifier, data burst arrival time to the spatial switch, data burst duration, FDL identifier $i$ ($Q_i$ delay time is requested, $0 \leq i \leq B$).

If the FDL identifier is 0, meaning no FDL buffer is required, the path & channel selector 44 will simply forward the configuration information to the spatial switch controller 30. Otherwise, the path & channel selector 44 searches for an idle incoming buffer channel to the RB switch 26 in decision block 68. If found, the path and channel selector 44 searches for an idle outgoing buffer channel from the RB switch 26 to carry the data burst reentering the spatial switch after the specified delay inside the RB switch 26 in decision block 70. It is assumed that once the data burst enters the RB switch, it can be delayed for any discrete time from the set $\{Q_1, Q_2, ..., Q_B\}$. If this is not the case, the path & channel selector 44 will have to take the RB switch architecture into account. If both idle channels to and from the RB switch 26 are found, the path & channel selector 44 will send configuration information to the spatial switch controller 30 and the RB switch controller 28 and send an ACK (acknowledgement) back to the 42 scheduler. Otherwise, it will send a NACK (negative acknowledgement) back to the scheduler 42 and the BHP and data burst will be discarded in block 65.

Configuration information from the path & channel selector 44 to the spatial switch controller 30 includes incoming DCG identifier, incoming data channel identifier, outgoing DCG identifier, outgoing data channel identifier, data burst arrival time to the spatial switch, data burst duration, FDL identifier $i$ ($Q_i$ delay time is requested, $0 \leq i \leq B$). If $i > 0$, the information also includes the incoming BCG identifier (to the RB switch), incoming buffer channel identifier (to the RB switch), outgoing BCG identifier (from the RB switch), and outgoing buffer channel identifier (from the RB switch).

Configuration information from path & channel selector to RB switch controller includes an incoming BCG identifier (to the RB switch), incoming buffer channel identifier (to the RB switch), outgoing BCG identifier (from the RB switch), outgoing buffer channel identifier (from the RB switch), data burst arrival time to the RB switch, data burst duration, FDL identifier $i$ ($Q_i$ delay time is requested, $1 \leq i \leq B$).

The spatial switch controller 30 and the RB switch controller 28 will perform the mapping from the configuration information received to physical components that involved in setting up the internal path(s), and configure the switches just-in-time to let the data burst fly-through the optical router 10. When the FDL identifier is larger than 0, the spatial switch controller will set up two internal paths in the spatial switch, one from the incoming data channel to the incoming recirculation buffer channel when the data burst arrives to the spatial switch, another from the outgoing buffer channel to the outgoing data channel when the data burst reenters the spatial switch. Upon receiving the ACK from the path & channel selector 44, the scheduler 42 will update the state information of selected data and control channels, and is ready to process a new BHP.

Finally, the BHP transmission module arranges the transmission of BHPs at times specified by the scheduler.

The above is the general description on how the data burst is scheduled in the optical router. Recirculating data bursts through the *RxR* recirculation buffer switch more than once could be easily extended from the design principles described below if so desired.

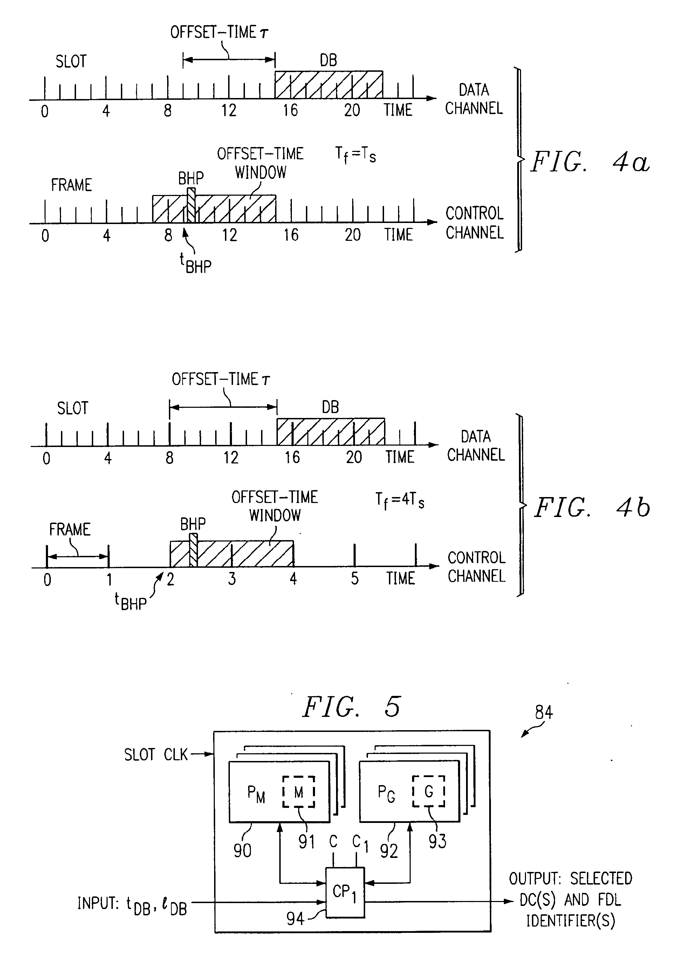

Figure 3 illustrates a block diagram of a scheduler 42. The scheduler 42 includes a scheduling queue 80, a BHP processor 82, a data channel scheduling (DCS) module 84, and a control channel scheduling (CCS) module 86. Each scheduler needs only to keep track of the busy/idle periods of its associated outgoing DCG 54 and outgoing CCG 52.

BHPs arriving from the electronic switch are first stored in the scheduling queue 80. For basic operations, all that is required is one scheduling queue 80, however, virtual scheduling queues 80 may be maintained for different service classes. Each queue 80 could be served according to the arrival order of BHPs or according to the actual arrival order of their associated data bursts. The BHP processor 82 coordinates the data and control channel scheduling process and sends the configuration to the path & channel selector 44. It could trigger the DCS module 84 and the CCS module 82 in sequence or in parallel, depending on how the DCS and CCS modules 84 and 82 are implemented.

In the case of serial scheduling, the BHP processor 82 first triggers the DCS module 84 for scheduling the data burst (DB) on a data channel in a desired output DCS 54. After determining when the data burst will be sent out, the BHP processor then triggers the CCS module 86 for scheduling the BHP on an associated control channel.

In the case of parallel scheduling, the BHP processor 82 triggers the DCS module 84 and CCS module 86 simultaneously. Since the CCS module 86 does not know when the data burst will be sent out, it schedules the BHP for all possible departure times of the data burst or its subset. There are in total $B+1$ possible departure times. Based on the actual data burst departure time reported from the DCS module 84, the BHP processor 86 will pick the right time to send out the BHP.

Slotted transmission is used in data and control channels between edge and core and between core nodes in the OBS network. A slot is a fixed-length time period. Let $T_s$ be the duration (e.g., in μs) of a time slot in data channels and $T_f$ be the duration of a time slot in control channels. $T_s \cdot r_d$ Kbits of information can be sent during a slot if the data channel speed is $r_d$ gigabits per second. Similarly, $T_f \cdot r_c$ Kbits of information can be sent during a slot if the control channel speed is $r_c$ gigabits per second. Two scenarios are considered, (1) $r_c = r_d$ and (2) $r_c \neq r_d$. In the latter case, a typical example is that $r_c = r_d /4$ (e.g., OC-48 is used in control channels and OC-192 is used in data channels).

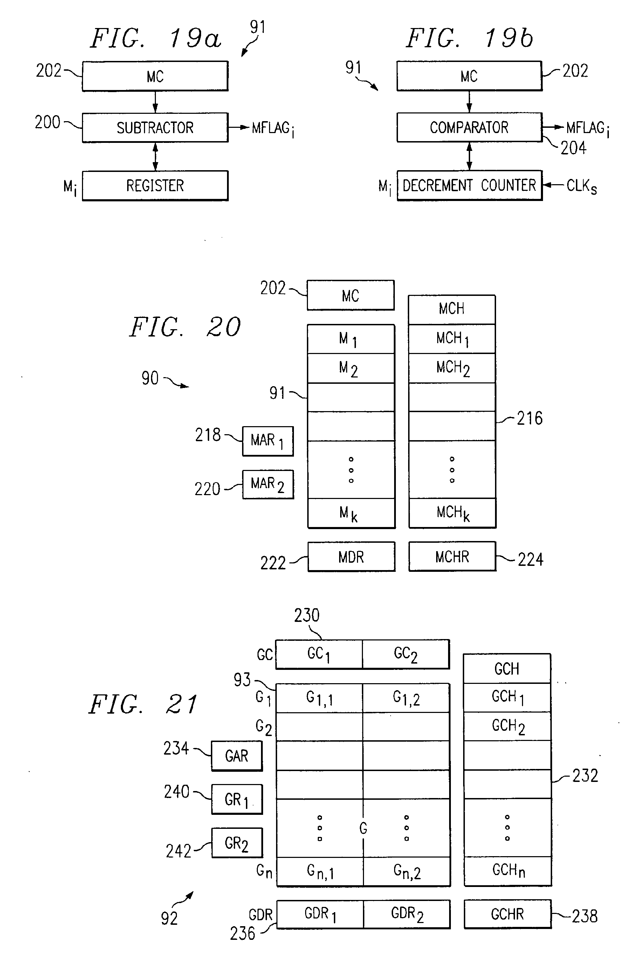

Without loss of generality, it is assumed that $T_f$ is equal to multiples of $T_s$. Two examples are depicted in Figures 4a and 4b (see also, Figure 18), which illustrates the timestamp and burst offset-time in a slotted transmission system for the cases where $T_f = T_s$ and $T_f = 4T_s$, with the initial offset time $\tau_0 = 8T_s$. To simplify the description, we use time *frame* to designate time *slot* in control channels. It is further assumed without loss of generality that, (1) data bursts are variable length, in multiple of slots, which can only arrive at slot boundaries, and (2) BHPs are also variable length, in, for instance, multiple of bytes. Fixed-length data bursts and BHPs are just special cases. In slotted transmission, there is some overhead in each slot for various purposes like synchronization and error detection. Suppose the frame payload on control channels is $P_f$ bytes, which is less than $(T_f \cdot r_c)$. 1000/8 bytes, the total amount of information can be transmitted in a time frame.

The OSM is configured periodically. For slotted transmission on data channels, a typical example of the configuration period is one slot, although the configuration period could also be a multiple of slots. Here it is assumed that the OSM is configured every slot. The length of a FDL $Q_i$ needs also to be a multiple of slots, $1 \leq i \leq B$. Due to the slotted transmission and switching, it is suggested to use the time slot as a *basic time unit* in the SCU for the purpose of data channel scheduling, control channel scheduling and buffer channel scheduling, as well as synchronization between BHPs and their associated data bursts. This will simplify the design of various schedulers.

The following integer variables are used in connection with Figures 4a, 4b and 5:

$t_{BHP}$ : the beginning of a time frame during which the BHP enters the SCU;
$t_{DB}$ : the arrival time of a data burst (DB) to the optical switching matrix (OSM);
$l_{DB}$ : the duration/length of a DB in slots;
$\Delta$ : delay (in slots) introduced by input FDL
$\tau$ : burst offset-time (in slots).

Each arriving BHP to the SCU is time-stamped at the transceiver interface, right after O/E conversion, recording the beginning of the time frame during which the BHP enters the SCU. For the BHPs received by the SCU in the same time frame, they will have the same timestamp $t_{BHP}$. For scheduling purpose, the most important variable is $t_{DB}$, the DB arrival time to the OSM. Suppose a *b*-bit slot counter is used in the SCU to keep track of time, $t_{DB}$ can be calculated as follows.

$$t_{DB} = (t_{BHP} \cdot T_f + \Delta + \tau) \bmod 2^b. \qquad (1)$$

Timestamp $t_{DB}$ will be carried by the BHP within the SCU 32. Note that the burst offset-time $\tau$ is also counted starting from the beginning of the time frame that the BHP arrives as shown in Figures 4a-b, where in Figure 4a, $t_{BHP}$ = 9 and $\tau$ = 6 slots, and in Figure 4b, $t_{BHP}$ = 2 and $\tau$ = 7 slots. Suppose $\Delta$ = 100 slots, we have $t_{DB}$ = 115, meaning that the DB will arrive at slot boundary 115. In Figures 4a-b, $1 \leq \tau \leq \tau_0$ = 8. It is assumed without loss of generality that the switching latency of the spatial switch in Figure 1b is negligible. So the data burst arrival time $t_{DB}$ to the spatial switch 24 is also its departure time if no FDL buffer is used. Note that even if the switching latency is not negligible, $t_{DB}$ can still be used as the data burst departure time in channel scheduling as the switching latency is compensated at router output ports where data and control channels are resynchronized.

Figure 5 illustrates a block diagram of a DCS module 84. In this embodiment, associative processor arrays $P_M$ 90 and $P_G$ 92 perform parallel searches of unscheduled channel times and gaps between scheduled channel times and update state information. Gaps and unscheduled times are represented in relative times. $P_M$ 90 and $P_G$ 92 are coupled to control processor $CP_1$ 94. In one embodiment, a LAUC-VF (Latest Available Unused Channel with Void Filling) scheduling principle is used to determine a desired scheduling, as described in connection with U.S. Ser. No. 09/689,584, entitled "Hardware Implementation of Channel Scheduling Algorithms of Optical Routers with FDL Buffers" to Zheng et al, filed October 12, 2000, and which is incorporated by reference herein.

The DCS module 84 uses two *b*-bit slot counters, C and $C_1$. Counter C keeps track of the time slots, which can be shared with the CCS module 86. Counter $C_1$ records the elapsed time slots since the last BHP is received. Both counters are incremented by every pulse of the slot clock. However, counter $C_1$ is reset to 0 when the DCS module 84 receives a new BHP. Once counter $C_1$ reaches $2^b$-1, it stops counting, indicating that at least $2^b$-1 slots have elapsed since the last BHP. The value of *b* should satisfy $2^b \geq W_s$ where $W_s$ is the data channel scheduling window. $W_s = \tau_0 + \Delta + Q_B + L_{max} - \delta$, where $L_{max}$ is the maximum length of a DB and $\delta$ is the minimum delay of a BHP from O/E conversion to the scheduler 42. Assuming that $\tau_0$ = 8, $\Delta$ = 120, $Q_B$ = 32, $L_{max}$ = 64, and $\delta$ = 40, then $W_s$ = 184 slots. In this case, $b$ = 8 bits.

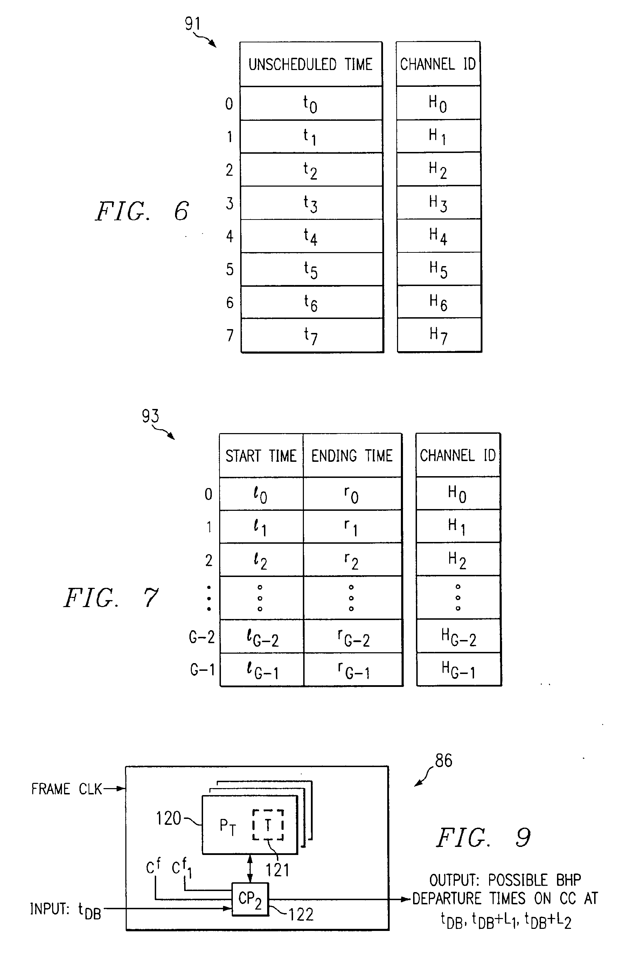

Associative processor $P_M$ in Figure 5 is used to store the unscheduled time of each data channel in a DCG. Let $t_i$ be the unscheduled time of channel $H_i$ which is stored in *i*th entry of $P_M$ $0 \leq i \leq K$ -1. Then from slot $t_i$ onwards, channel $H_i$ is free, i.e., nothing being scheduled. $t_i$ is a relative time, with respect to the time slot that the latest BHP is received by the scheduler. $P_M$ has an associative memory of 2K words to store the unscheduled times $t_i$ and channel identifiers, respectively. The unscheduled times are stored in descending order. For example, in Figure 6 we have $K$ = 8 and $t_0 \geq t_1 \geq t_2 \geq t_3 \geq t_4 \geq t_5 \geq t_6 \geq t_7$.

Similarly, associative processor $P_G$ in Figure 5 is used to store the gaps of data channels in a DCG. We use $l_j$ and $r_j$ to denote the start time and ending time of gap j, $0 \leq j \leq G$ - 1, which are also relative times. This gap is stored in *j*th entry of $P_G$ and its corresponding data channel is $H_j$. $P_G$ has an associative memory of G words to store the gap start time, gap ending time, and channel identifiers, respectively. Gaps are also stored in the descending order according to their start times $l_j$. For example, Figure 7 illustrates the associative memory of $P_G$, where $l_0 \geq l_1 \geq l_2 \geq ... \geq l_{G-2} \geq l_{G-1}$. G is the total number of gaps that can be stored. If there are more than G gaps, the newest gap with larger start time will push out the gap with the smallest start time, which resides at the bottom of the associative memory. Note that if $l_j$ = 0, then there are in total j gaps in the DCG, as $l_{j+1} = l_{j+2} =... = l_{G-1} = 0$.

Upon receiving a request from the BHP processor to schedule a DB with departure time $t_{DB}$ and duration $l_{DB}$, the control processor ($CP_1$) 94 first records the time slot $t_{sch}$ during which it receives the request, reads counter $C_1$ ($t_e \leftarrow C_1$) and reset $C_1$ to 0. Using $t_{sch}$ as a new reference time, the $CP_1$ then calculates the DB departure time (no FDL buffer) with respect to $t_{sch}$ as

$$t'_{DB} = (t_{DB} - t_{sch} + 2^b) \bmod 2^b, \tag{2}$$

In the meantime, $CP_1$ updates $P_M$ using

$$t_i = \max(0, t_i - t_e), \qquad 0 \leq i \leq K - 1 \tag{3}$$

and updates $P_G$ using the following formulas,

$$l_j = \max(0, l_j - t_e), \qquad 0 \leq j \leq G - 1 \tag{4}$$

and

$$r_j = \max(0, r_j - t_e), \qquad 0 \le j \le G - 1. \tag{5}$$

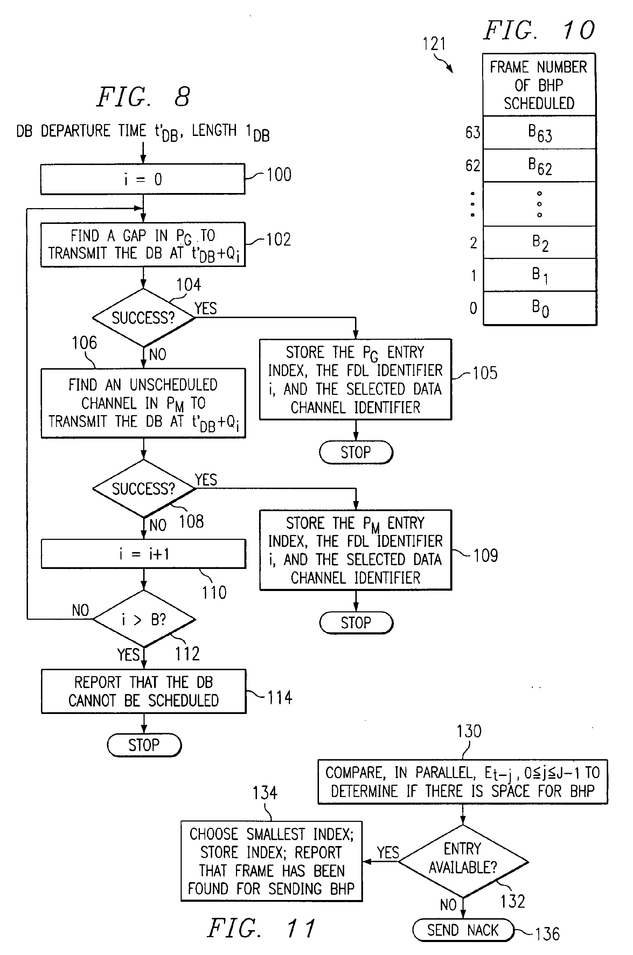

After the memory update, $CP_1$ 94 arranges the search of eligible outgoing data channels to carry the data burst according to the LAUC-VF method, cited above. The flowchart is given in Figure 8. In block 100, and index $i$ is set to "0". In block 102, $P_G$ finds a gap in which to transmit the data burst $t'_{DB}+Q_i$. In blocks 106, $P_M$ finds an unscheduled channel in $P_M$ to transmit the data burst at $t'_{DB}+Q_i$. Note that the operations of finding a gap in $P_G$ to transmit the DB at time $t'_{DB}+Q_i$ and finding an unscheduled time in $P_M$ to transmit the DB at time $t'_{DB}+Q_i$ are preferably performed in parallel. The operation of finding a gap in $P_G$ to transmit the data burst at time $t'_{DB}+Q_i$ (block 102) includes parallel comparison of each entry in $P_G$ with $(t'_{DB}+Q_i, t'_{DB}+Q_i +l_{DB})$. If $t'_{DB}+Q_i \ge l_j$ and $t'_{DB} +Q_i+l_{DB} \le r_j$, the response bit of entry $j$ returns 1, otherwise it returns 0, $0 \le j \le G - 1$. If at least one entry in $P_G$ returns 1, the gap with the smallest index is selected.

The operation finding an unscheduled time in $P_M$ to transmit the DB at time $t'_{DB}+Q_i$ (block 106) includes parallel comparison of each entry in $P_M$ with $t'_{DB} +Q_i$. If $t'_{DB} +Q_i \ge t_j$, the response bit of entry $j$ returns 1, otherwise it returns 0, $0 \le j \le K -1$. If at least one entry in $P_M$ returns 1, the entry with the smallest index is selected.

If the scheduling is successful in decision blocks 104 or 108, then the $CP_1$ will inform the BHP processor 82 of the selected outgoing data channel and the FDL identifier in blocks 105 or 109, respectively. After receiving an ACK from the BHP processor 82, the $CP_1$ 94 will update $P_G$ 90 or $P_M$ 94 or both. If scheduling is not successful, $i$ is incremented in block 110, and $P_M$ and $P_G$ try to a time to schedule the data burst at a different delay. Once $Q_i$ reaches the maximum delay (decision block 112), the processors $P_M$ and $P_G$ report that the data burst cannot be scheduled in block 114.

To speed up the scheduling process, the search can be performed in parallel. For example, if $B=2$ and three identical $P_M$'s and $P_G$'s are used, as shown in Figure 5, one parallel search will determine whether the data burst can be sent out at times $t'_{DB}$, $t'_{DB}+Q_1$, and $t'_{DB} +Q_2$. The smallest time is chosen in case that the data burst can be sent out at different times. In another example, if $B=5$ and three identical $P_M$'s and $P_G$'s are used, at most two parallel searches will determine whether the DB can be scheduled.

Some simplified versions of the LAUC-VF methods are listed below which could also be used in the implementation. First, an FF-VF (first fit with void filling) method could be used wherein the order of unscheduled times in $P_M$ and gaps in $P_G$ are not sorted in a given order (either descending or ascending order), and the first eligible data channel found is used to carry the data burst. Second, a LAUC (latest available unscheduled channel) method could be used wherein $P_G$ is not used, i.e., no void filling is considered. This will further simplify the design. Third, a FF (first fit) method could be used. FF is a simplified version of FF-VF where no void filling is used.

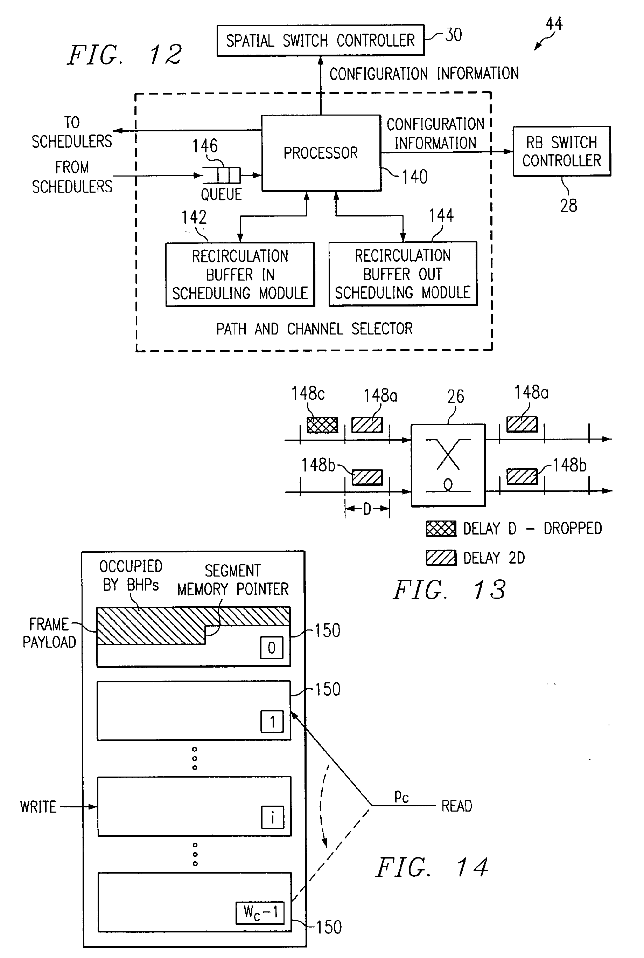

The block diagram of the CCS module 86 is shown in Figure 9. Similar to the DCS module 84, associative processor $P_T$ 120 keeps track of the usage of the control channel. Since a maximum of $P_f$ bytes of payload can be transmitted per frame, memory $T$ 121 of $P_T$ 120 tracks only the number of bytes available per frame (Figure 10). Relative time is used here as well. The CCS module 86 has two $b_1$-bit frame counters, $C^f$ and $C_1^f$. $C^f$ counts the time frames. $C_1^f$ records the elapsed frames since the receiving of the last BHP. Upon receiving a BHP with arrival time $t_{DB}$, $CP_2$ 122 timestamps the frame during which this BHP is received, i.e., $t_{sch}^f \leftarrow C^f$. In the meantime, it reads counter $C_1^f$ ($t_e^f \leftarrow C_1^f$) and reset $C_1^f$ to 0. It then updates the $P_T$ by shifting $B_i$'s down by $t_e^f$ positions, i.e.,

$$B_{i-t_e^f} = B_i, \ t_e^f \le i \le 2^{b_1} -1 ,$$

and $B_i = P_f$ for $2^{b_1} - t_e^f \le i \le 2^{b_1} -1$. In the initialization, all the entries in $P_T$ are set to $P_f$. Next, $CP_2$ calculates the frame $t_{DB}^f$ during which the data burst will depart (assuming FDL $Q_i$ is used) using

$$t_{DB}^f(Q_i) = \lfloor ((t_{DB} + Q_i)\mathrm{mod} \ 2^b)/T_f \rfloor, \ \ 0 \le i \le B, \tag{6}$$

where $T_f$ is the frame length in slots. The relative time frame that the DB will depart is calculated from

$$t_{DB}^f(Q_i)=(t_{DB}^f(Q_i)-t_{sch}^f + 2^{b_1}) \ \mathrm{mod} \ 2^{b_1}, \ \ 0 \le i \le 2. \tag{7}$$

The parameter $b_1$ can be estimated from parameter b, e.g., $2^{b_1} = 2^b/ T_f$. When $b=8$ and $T_f = 4$, $b_1=6$. The following method is used to search for the possible BHP departure time for a given DB departure time t (e.g., $t = t'^f_{DB}(Q_i)$). The basic idea is to send the BHP as earlier as possible, but the offset time should be no larger than $\tau_0$ (as

described in connection with Figures 4a and 4b). Let $J = \llcorner \tau_0/T_f\lrcorner$. For example, when $\tau_0$ = 8 slots and $T_f$ = 1 slot, $J$ = 8. When $\tau_0$ = 8 slots and $T_f$ = 4 slots, $J$ = 2. Suppose the BHP length is X bytes.

In the preferred embodiment, a constrained earliest time (CET) method is used for scheduling the control channel, as shown in Figure 11. In step 130, $P_T$ 120 performs a parallel comparison of X (i.e., the length of a BHP) with the contents $B_{t-j}$ of relevant entries of memory $T$ 121, $E_{t-j}$, $0 \le j \le J$ - 1 $and$ $t - j > 0$. If $X \le B_{t-j}$, entry $E_{t-j}$ returns 1, otherwise it returns 0. In step 132, if at least one entry in $P_T$ returns 1, the entry with the smallest index is chosen in step 134. The index is stored and the CCS module 86 reports that a frame to send the BHP has been found. If no entry in $P_T$ returns a "1", then a negative acknowledgement is sent to the BHP processor 82. (step 136)

The actual frame $t_f$ that the BHP will be sent out is $(t^f{}_{DB} - j + 2^{b_1})$ mod $2^{b_1}$ if $E_{t-j}$ is chosen. The new burst offset-time is $(t_{DB}$ mod $T_f) + j \cdot T_f$.

After running the CET method, the CCS module 86 sends the BHP processor 82 the information on whether the BHP can be scheduled and in which time frame it will be sent. Once it gets an ACK from the BHP processor 82, the CCS module 86 will update $P_T$. For example, if the content in entry y needs to be updated, then $B_y \leftarrow B_y - X$. If the BHP cannot be scheduled, the CCS module 86 will send a NACK to the BHP processor 82. In the real implementation, the contents in $P_T$ do not have to move physically. A pointer can be used to record the entry index associated with the reference time frame 0.

For parallel scheduling, as discussed below, since the CCS module 86 does not know the actual departure time of the data burst, it schedules the BHP for all possible departure times of the data burst or a subset and reports the results to the BHP processor 82. When $B$=2, there are three possible data burst departure times, $t'_{DB}$, $t'_{DB}+Q_1$ and $t'_{DB}+Q_2$. Like the DCS module 84, if three identical $P_T's$ are used, as shown in Figure 9, one parallel search will determine whether the BHP can be scheduled for the three possible data burst departure times.

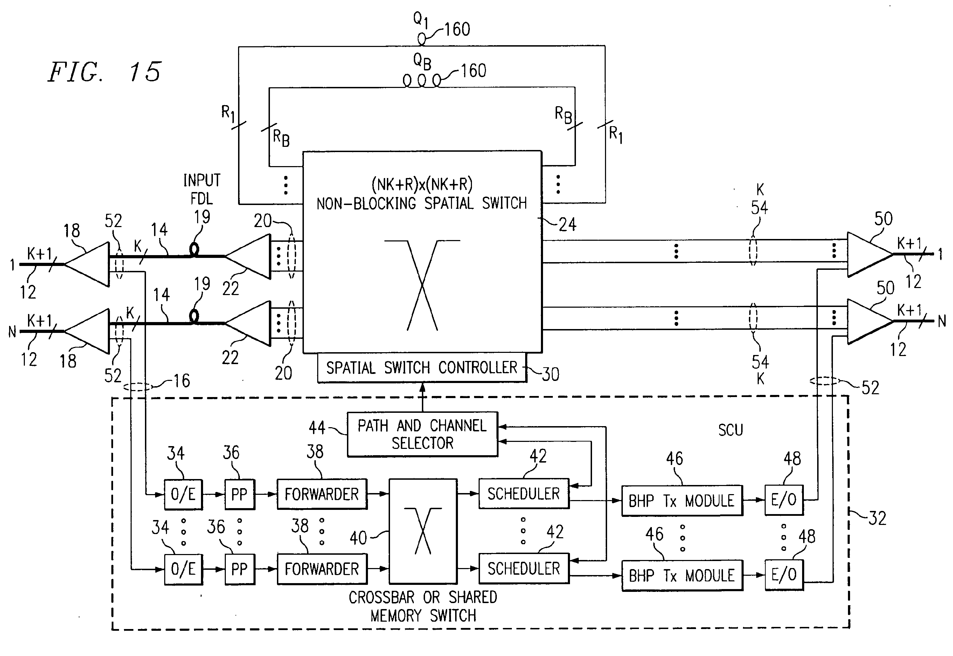

A block diagram of the path & channel selector 44 is shown in Figure 12. The function of the path & channel selector 44 is to control the access to the $RxR$ RB switch 26 and to instruct the RB switch controller 28 and the spatial switch controller 30 to configure the respective switches 26 and 24. The path & channel selector 44 includes processor 140 coupled to a recirculation-buffer-in scheduling (RBIS) module 142, a recirculation-buffer-out scheduling (RBOS) module 144 and a queue 146. The RBIS module 142 keeps track of the usage of the $R$ incoming channels to the RB switch 26 while the RBOS module 144 keeps track of the usage of the $R$ outgoing channels from the RB switch 26. Any scheduling method can be used in RBIS and RBOS modules 142 and 144, e.g., LAUC-VF, FF-VF, LAUC, FF, etc. Note that RBIS module 142 and RBOS module 144 may use the same or different scheduling methods. From manufacturing viewpoint, it is better that the RBIS and RBOS module use the same scheduling method as the DCS module 84. Without loss of generality, it is assumed here that the LAUC-VF method is used in both RBIS and RBOS modules 142 and 144; thus, the design of DCS module can be reused can be used for these modules.

Assuming a data burst with duration $l_{DB}$ arrives to the OSM at time $t_{DB}$ and requires a delay time of $Q_i$. The processor 140 triggers the RBIS module 142 and RBOS module 144 simultaneously. It sends the information of $t_{DB}$ and $l_{DB}$ to the RBIS module 142, and the information of time-to-leave the OSM ($t_{DB} + Q_i$) and $l_{DB}$ to the RBOS module 144. The RBIS module 142 searches for incoming channels to the RB switch 26 which are idle for the time period of $(t_{DB}, t_{DB} + l_{DB})$. If there are two or more eligible incoming channels, the RBIS module will choose one according to LAUC-VF. Similarly, the RBOS module 144 searches for outgoing channels from the RB switch 26 which are idle for the time period of $(t_{DB} + Q_i, t_{DB} + l_{DB} + Q_i)$. If there are two or more eligible outgoing channels, the RBOS module 144 will choose one according to LAUC-VF. The RBIS (RBOS) module sends either the selected incoming (outgoing) channel identifier or NACK to the processor. If an eligible incoming channel to the RB switch 26 and an eligible outgoing channel from the RB switch 26 are found, the processor will send back ACK to both RBIS and RBOS module which will then update the channel state information. In the meantime, it will send ACK to the scheduler 42 and the configuration information to the two switch controllers 28 and 30. Otherwise, the processor 140 will send NACK to the RBIS and RBOS modules 142 and 144 and a NACK to the scheduler 42.

The RBOS module 144 is needed because the FDL buffer to be used by a data burst is chosen by the scheduler 42, not determined by the RB switch 26. It is therefore quite possible that a data burst can enter the RB switch 26 but cannot get out of the RB switch 26 due to outgoing channel contention. An example is shown in Figure 13, where three fixed-length data bursts 148a-c arrive to the 2x2 RB switch 26. The first two data bursts 148a-b will be delayed 2D time while the third DB will be delayed D time. Obviously, these three data bursts will leave the switch at the same time and contend for the two outgoing channels. The third data burst 148c is lost in this example.

The BHP transmission module 46 is responsible for transmitting the BHP on outgoing control channel 52 in the time frame determined by the BHP processor 82. Since the frame payload is fixed, equal $P_f$ in slotted transmission, one possible implementation is illustrated in Figure 14, where the whole memory is divided into $W_c$ segments 150 and BHPs to be transmitted in the same time frame are stored in one segment 150. $W_c$ is the control channel scheduling window, which equals to $2^{b_1}$. There is a memory pointer per segment (shown in segment $W_0$, pointing to the memory address where a new BHP can be stored. To distinguish BHPs within a frame, the frame overhead should contain a field indicating the number of BHPs in the frame. Furthermore, each BHP should contain a length field indicating the packet length (e.g., in bytes), from the first byte to the last byte of the BHP.

Suppose $t_c$ is the current time frame during which the BHP is received by the BHP transmission module and $p_c$ points to the current memory segment. Given the BHP departure time frame $t_f$, the memory segment to store this BHP is calculated from $(p_c + (t_f - t_c + 2^{b_1}) \bmod 2^{b_1}) \bmod 2^{b_1}$.

Figure 15 shows the optical router architecture using passive FDL loops 160 as the recirculation buffer, where the number of recirculation channels $R = R_1 + R_2 + ... + R_B$, with $j$th channel group introducing $Q_j$ delay time, $1 \leq j \leq B$. Here the recirculation channels are differentiated while in Figure 1b all the recirculation channels are equivalent, able to provide $B$ different delays. The potential problem of using the passive FDL loops is the higher block probability of accessing the shared FDL buffer. For example, suppose $B = 2$, $R = 4$ and $R_1 = 2$, $R_2 = 2$, and currently two recirculation channels of $R_1$ are in use. If a new DB needs to be delayed by $Q_1$ time, it may be successfully scheduled in Figure 1b, as there are still two idle recirculation channels. However, it cannot be scheduled in Figure 15, since the two channels able to delay $Q_1$ are busy.

The design of the SCU 32 is almost the same as described previously, except for the following changes: (1) the RBOS module 144 within the path & channel selector 44 (see Figure 12) is no longer needed, (2) slight modification is required in the RBIS module 142 to distinguish recirculation channels if $B > 1$. To reduce the blocking probability of accessing the FDL buffer when $B > 1$, the scheduler is required to provide more than one delay option for each databurst that needs to be buffered. The impact on the design of scheduler and path & channel selector 44 is addressed below. Without loss of generality, it is assumed in the following discussion that the scheduler 42 has to schedule the databurst and the BHP for $B+1$ possible delays.

The design of DCS module 84 shown in Figure 5 remains valid in this implementation. The search results could be stored in the format shown in Table 1 (assuming $B=2$), where the indicator (1/0) indicates whether or not an eligible data channel is found for a given delay, say $Q_i$. The memory type (0/1) indicates $P_M$ or $P_G$. The entry index gives the location in the memory, which will be used for information update later on. The channel identifier column gives the identifiers of the channels found. The DCS module then passes the indicator column and the channel identifier column (only those with indicator 1) to the BHP processor.

Table 1: Stored search results in DCS module ($B=2$).

| | Indicator (1 bit) | Memory type (1 bit) | Entry Index $\mathrm{Max}(\log_2 G, \log_2 K)$ bits | Channel identifier ($\log_2 K$ bits) |
|---|---|---|---|---|
| $Q_0$ | | | | |
| $Q_1$ | | | | |
| $Q_2$ | | | | |

The design of CCS module 86 shown in Figure 9 also remains valid. The search results could be stored in the format shown in Table 2 (assuming $B=2$), where the indicator (1/0) indicates whether or not the BHP can be scheduled on the control channel for a given DB departure time. The entry index gives the location in the memory, which will be used for information update later on. The "frame to send BHP" column gives the time frames in which the BHP are scheduled to send out. The CCS module then passes the indicator column and the "frame to send BHP" column (only those with indicator 1) to the BHP processor.

Table 2: Stored search results in CCS module ($B=2$).

| | Indicator (1 bit) | Entry Index ($b_1$ bits) | Frame to send BHP ($b_1$ bits) |
|---|---|---|---|
| $Q_0$ | | | |
| $Q_1$ | | | |
| $Q_2$ | | | |

After comparing the indicator columns from the DCS and CCS modules, the BHP processor 82 in Figure 3 knows whether the data burst and its BHP can be scheduled for a given FDL delay $Q_i$, $1 \leq i \leq B$ and determines which configuration information will be sent to the path & channel selector 44 in Figure 12. The three possible scenarios are, (1) the data burst can be scheduled without using FDL buffer, (2) the data burst can be scheduled via using FDL buffer, and (3) the data burst cannot be scheduled.

In the third case, the data burst and its BHP are simply discarded. In the first case, the following information will be sent to the path & channel selector: incoming DCG identifier, incoming data channel identifier, outgoing DCG identifier, outgoing data channel identifier, data burst arrival time to the spatial switch, data burst duration, FDL identifier 0 (i.e. $Q_0$). The path & channel selector 44 will immediately send back an ACK after receiving the information. In the second case, the following information will be sent to the path & channel selector:

■ incoming DCG identifier,
■ incoming data channel identifier,
■ number of candidate FDL buffer $x$,
■ for ($i$=1 to $x$ do)

    • outgoing DCG identifier,
    • outgoing data channel identifier,
    • FDL identifier $i$,

■ data burst arrival time to the spatial switch,
■ data burst duration.

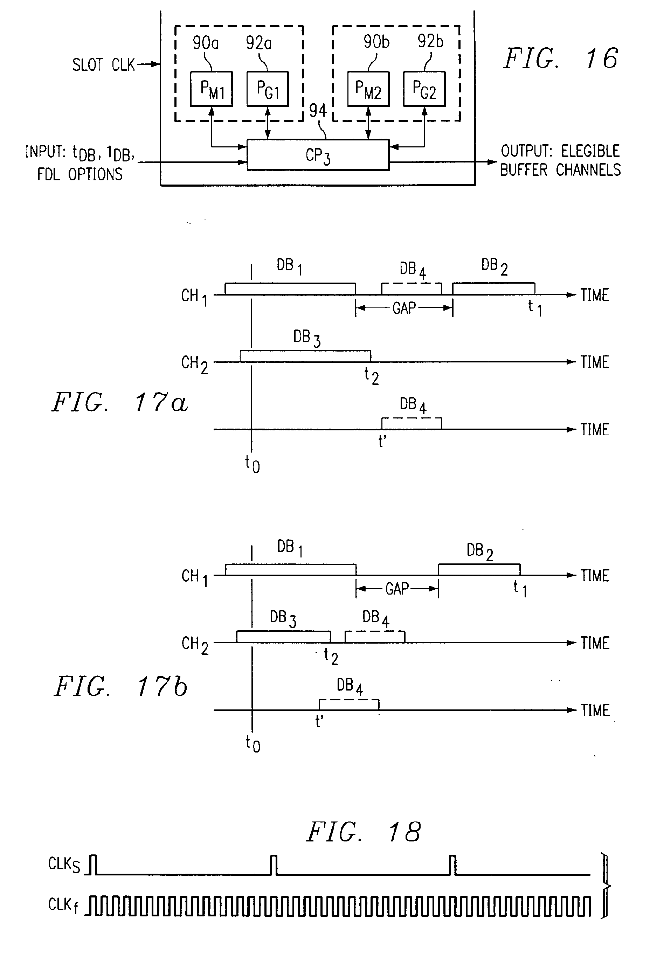

In the second scenario, the path & channel selector 44 will search for an idle buffer channel to carry the data burst. The RBIS module 142 is similar to the one described in connection with Figure 12, except that now it has a $P_M$ and $P_G$ pair for each group of channels with delay $Q_i$, $1 \leq i \leq B$. An example is shown in Figure 16 for $B$=2, as an example. With one parallel search, the RBIS module will know whether the data burst can be scheduled. When $x$=1, the RBIS module 142 performs parallel search on ($P_{M1}$ 90a, $P_{G1}$ 92a) or ($P_{M2}$ 90b, $P_{G2}$ 92b), depending on which FDL buffer is selected by the BHP processor 82. If an idle buffer channel is found, it will inform the processor 140, which in turn sends an ACK to the BHP processor 82. When $x$=2, both ($P_{M1}$, $P_{G1}$) and ($P_{M2}$, $P_{G2}$) will be searched. If two idle channels with different delays are found, the channel with delay $Q_1$ is chosen. In this case, an ACK together with the information that $Q_1$ is chosen will be sent to the BHP processor 82. After a successful search, the RBIS module 142 will update the corresponding $P_M$ and $P_G$ pair.

Figures 17 - 26 illustrate variations of the LAUC-VF method, cited above. In the LAUC-VF method cited above, two associative processors $P_M$ and $P_G$ are used to store the status of all channels of the same outbound link. Specifically, $P_M$ stores $r$ words, one for each of the r data channels of an outbound link. It is used to record the unscheduled times of these channels. $P_G$ contains $n$ superwords, one for an available time interval (a gap) of some data channel. The times stored in $P_M$ and $P_G$ are relative times. $P_M$ and $P_G$ support associative search operations, and data movement operations for maintaining the times in a sorted order. Due to parallel processing, $P_M$ and $P_G$ are used as major components to meet stringent real-time channel scheduling requirement.

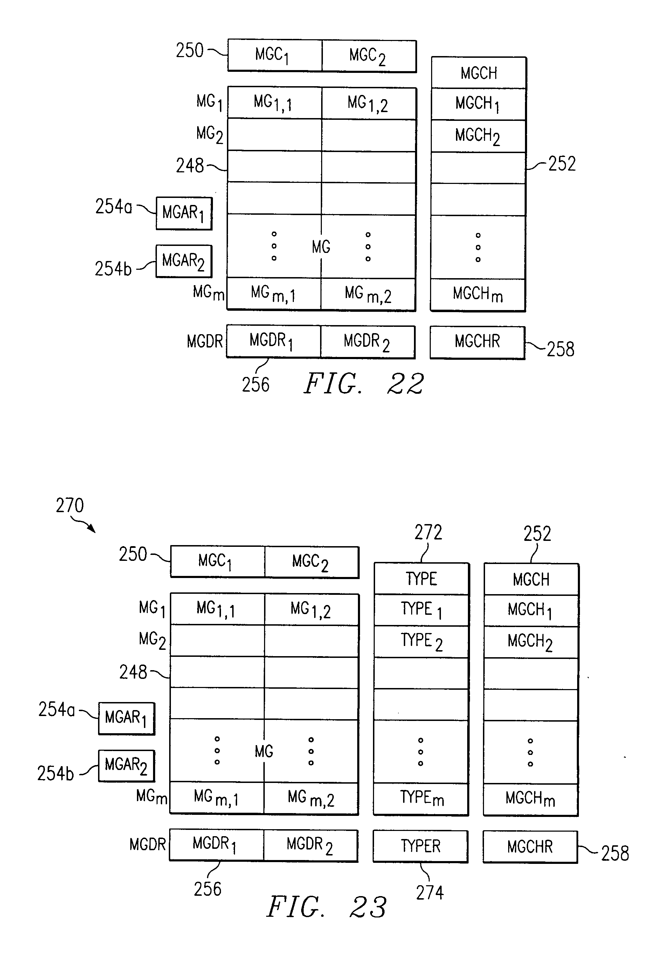

In the embodiment described in Figures 22-23, a pair of associative processors $P_M$ and $P_G$ for the same outbound link are combined into one associative processor $P_{MG}$. The advantage of using a unified $P_{MG}$ to replace a pair of $P_M$ and $P_G$ is the simplification of the overall core router implementation. In terms of ASIC implementation, the development cost of a $P_{MG}$ can be much lower than that of a pair of $P_M$ and $P_G$. $P_{MG}$ can be used to implement a simpler variation of the LAUC-VF method with faster performance.

In Figures 17a and 17b, two outbound channels $Ch_1$ and $Ch_2$ are shown, with $t_0$ being the current time. With respect to $t_0$, channel $Ch_1$ has two DBs, $DB_1$ and $DB_2$, scheduled and channel $Ch_2$ has $DB_3$ scheduled. The time between $DB_1$ and $DB_2$ on $Ch_1$, which is a maximal time interval that is not occupied by any DB, is called a gap. The times labeled $t_1$ and $t_2$ are the unscheduled time for $Ch_1$ and $Ch_2$, respectively. After $t_1$ and $t_2$, $Ch_1$ and $Ch_2$ are available for transmitting any DB, respectively.

The LAUC-VF method tries to schedule DBs according to certain priorities. For example, suppose that a new data burst $DB_4$ arrives at time $t'$. For the situation of Figure 17a, $DB_4$ can be scheduled within the gap on $Ch_1$, or on $Ch_2$ after the unscheduled time of $Ch_2$. The LAUC-VF method selects $Ch_1$ for $DB_4$, and two gaps are generated from one original gap. For the situation of Figure 17b, $DB_4$ conflicts with $DB_1$ on $Ch_1$ and conflicts with $DB_3$ on $Ch_2$. But by using FDL buffers, it may be scheduled for transmission without conflicting DBs on $Ch_1$ and/or DBs on $Ch_2$. Figure 17b shows the scheduling that $DB_4$ is assigned to $Ch_2$, and a new gap is generated.

Assuming that an outbound link has r data channels, the status of this link can be characterized by two sets:

$S_M = \{(t_i, \text{ i}) \mid t_i \text{ is the unscheduled time for channel } Ch_i\}$

$S_G = \{(l_j, r_j, c_j) \,|\, l_j < r_j$ and the interval $[l_j, r_j]$ is a gap on channel $Ch_{cj}\}$

In the embodiment of LAUC-VF proposed in U.S. Ser. No. 09/689,584, the two associative processors $P_M$ and $P_G$ were proposed to represent $S_M$ and $S_G$, respectively. Due to fixed memory word length, the times stored in the associative memory M of $P_M$ and the associative memory $G$ of $P_G$ are relative times. Suppose the current time is $t_0$. Then any time value less than $t_0$ is of no use for scheduling a new DB. Let

$$S'_M = \{(\max\{t_i - t_0, 0\}, i)|(t_i, i) \in S_M\}$$

$$S'_G = \{(\max\{l_j - t_0, 0\}, \max\{l_j - t_0, 0\}, c_j) \,|\, (l_j, r_j, c_j) \in S_G\}$$

The times in $S'_M$ and $S'_G$ are times relative to the current time $t_0$, which is used as a reference point 0. Thus, M of $P_M$ and G of $P_G$ are actually used to store $S'_M$ and $S'_G$ respectively.

The channel scheduler proposed in U.S. Ser. No. 09/689,584 assumes that DBs have arbitrary lengths. One possibility is to assume a slot transmission mode. In this mode, DBs are transmitted in units of slots, and BHPs are transmitted as groups, and each group is carried by a slot. A slot clock $CLK_s$ is used to determine the slot boundary. The slot transmissions are triggered by pulses of $CLK_s$. Thus, the relative time is represented in terms of number of $CLK_s$ cycles. The pulses of $CLK_s$ are shown in Figure 18. In addition to clock $CLK_s$, there is another finer clock $CLK_f$. The period of $CLK_s$ is a multiple of the period $CLK_f$. In the example shown in Figures 18, one $CLK_s$ cycle contains sixteen $CLK_f$ cycles. Clock $CLK_f$ is used to coordinate operations performed within a period of $CLK_s$.

In Figures 19a and 19b, modifications to the hardware design of $P_M$ and $P_G$ given in U.S. Ser. No. 09/689,584 are provided for accommodation of slot transmissions. In $P_M$, there is an associative memory $M$ of r words. Each word $M_i$ of M is essentially a register, and it is associated with a subtractor 200. A register $MC$ holds an operand. In the embodiment of Figure 19a, the value stored in MC is the elapsed time since the last update of $M$. The value stored in $MC$ is broadcast to all words $M_i$, $1 \leq i \leq r$. Each word $M_i$ does the following: $M_j \leftarrow M_j - MC$ if $M_j > MC$; otherwise, $M_j \leftarrow 0$. This operation is used to update the relative times stored in $M$. If $MC$ stores the elapsed time since last time parallel subtraction operation is performed, performing this operation again updates these times to the time relative to the time when this new PARALLEL-SUBTRACTION is performed. Another operation is the parallel comparison. In this operation, the value stored in $MC$ is broadcast to all words $M_i$, $1 \leq i \leq r$. Each word $M_i$ does the following: if $MC > M_i$ then $MFLAG_i = 1$, otherwise $MFLAG_i = 0$. Signals $MFLAG_i$, $1 \leq i \leq r$, are transformed into an address by a priority encoder. This address and the word with this address are output to the address and data registers, respectively, of $M$. This operation is used to find a channel for the transmission of a given DB. Similarly, two subtractors are used for a word, one for each sub-word, of the associative memory G in $P_G$.

An alternative design, shown in Figure 19b, is to implement each word $M_i$ in $M$ as a decrement counter with parallel load. The counter is decremented by 1 by every pulse of the system slot clock $CLK_s$. The counting stops when the counter reaches 0, and the counting resumes once the counter is set to a new positive value. Suppose that at time $t_0$ the counter's value is t' and at time $t_i > t_0$ the counters value is t". Then t" is the same time of t', but relative to $t_i$, i.e. t" = $\max\{t' - (t_1 - t_0), 0\}$. Note that any negative time (i.e. t' - $(t_1 - t_0) < 0$) with the new reference point $t_1$ is not useful in the lookahead channel scheduling. Associated with each word $M_i$ is a comparator 204. It is used for the parallel comparison operation. Similarly, a word of G in $P_G$ can be implemented by two decrement counters with two associated comparators.

The system has a c-bit circular increment counter $C_s$. The value of $C_s$ is incremented by 1 by every pulse of slot clock $CLK_s$. Let $t_{latency}(BHP_i)$ be the time, in terms of number of $S'_G$ cycles, between the time $BHP_i$ is received by the router and the time $BHP_i$ is received by the channel scheduler. The value c is chosen such that:

$$2^c > \left\lceil \frac{\max t_{latency}(BHP_i)}{MAX_s} \right\rceil$$

where $MAX_s$ is the number of $CLK_f$ cycles within a $CLK_s$ cycle. When $BHP_i$ is received by the router, $BHP_i$ is timestamped by operations $timestamp_{recv}(BHP_i) \leftarrow C_s$. When $BHP_i$ is received by the scheduler of the router, $BHP_i$ is timestamped again by $timestamp_{sch}(BHP_i) \leftarrow C_s$. Let

$$D_i = (timestamp_{recv}(BHP_i) + 2^c - timestamp_{sch}(BHP_i)) \bmod 2^c.$$

Then, the relative arrival time (in terms of slot clock $CLK_s$) of $DB_i$ at the optical switching matrix of the router is $T_i = \Delta + \tau_i + D_i$, where $\tau_i$ is the offset time between $BHP_i$ and $DB_i$, and $D$ is the fixed input FDL time. Using the slot time at which $timestamp_{sch}(BHP_i) \leftarrow C_s$ is performed as reference point, and the relative times stored in $P_M$ and $P_G$, $DB_i$ can be correctly scheduled.

In the hardware implementation of LAUC-VF method, associative processors $P_M$ and $P_G$ are used to store and process $S'_M$ and $S'_G$, respectively. At any time, $S'_M = \{(t_i, i) \mid 1 \leq i \leq r\}$ and $S'_G = \{(l_j, r_j, c_j) \mid l_j \geq 0\}$. A pair $(t_i, i)$ in $S'_M$ represents the unscheduled time on channel $Ch_i$, and a triple $(l_j, r_j, c_j)$ in $S'_G$ represents a time gap (interval) $[l_j, r_j]$ on channel $Ch_{cj}$. The unscheduled time $t_i$ can be considered as a semi-infinite gap (interval) $[t_i, \infty]$. Thus, by including such semi-infinite gaps into $S'_G$, $S'_M$ is no longer needed.

More specifically, let $S''_M = \{(t_i, \infty, i) \mid (t_i, i) \in S'_M\}$, and define $S'_{MG} = S''_M \cup S'_G$. The basic idea of combining $P_M$ and $P_G$ is to build $P_{MG}$ by modifying $P_G$ so that $P_{MG}$ is used to process $S'_{MG}$. We present the architecture of associative processor $P_{MG}$ for replacing $P_M$ and $P_G$. $P_{MG}$ uses an associative memory $MG$ to store pairs in $S'_M$ and triples in $S'_G$. As G in $P_G$, each word of MG has two sub-words, with the first one for $l_j$ and second one for $r_j$ when it is used to store $(l_j, r_j, c_j)$. When a word of $MG$ is used to store a pair $(t_i, i)$ of $S'_M$, the first sub-word is used for $t_i$, and the second is left unused. The first r words are reserved for $S'_M$, and the remaining words are reserved for $S'_G$. The first r words are maintained in non-increasing order of their first sub-word. The remaining words are also maintained in non-increasing order of their first subword. New operations for $P_{MG}$ are defined.

Below, the structures and operations of $P_M$ and $P_G$ are summarized, and the structure and operations of $P_{MG}$ are defined. The differences between $P_{MG}$ include the number of address registers used, the priority encoders, and operations supported. It is shown that $P_{MG}$ can be used to implement the LAUC-VF method without any slow-down, in comparison with the implementation using $P_M$ and $P_G$.

The outbound data channel of a core router has r channels (wavelengths) for data transmission. These channels are denoted by $Ch_1, Ch_2, .., Ch_r$. Let S = $\{t_i \mid 1 \leq i \leq r\}$, where $t_i$ is the unscheduled time for channel $Ch_i$. In other words, at any time after $t_i$, channel $Ch_i$ is available for transmission. Given a time $T'$, $P_M$ is an associative processor for fast search of $T'' = \min\{t_i \mid t_i \geq T'\}$, where $T'$ is a given time. Suppose that $T'' = t_j$, then channel $Ch_j$ is considered as a candidate data channel for transmitting a DB at time T'.

For purposes of illustration, the structures of $P_M$ and $P_G$ are shown in Figures 20 and 21 and $P_{MG}$ is shown in Figure 22.

An embodiment of $P_M$ 210 is shown in Figure 20. Associative processor $P_M$ includes an associative memory $M$ 212 of $k$ words, $M_1, M_2, ..., M_k$, one for each channel of the data channel group. Each word is associated with a simple subtraction circuit for subtraction and compare operations. The words are also connected as a linear array. Comparand register MC 214 holds the operand for comparison. $MCH$ 216 is a memory of $k$ words, $MCH_1, MCH_2,..., MCH_k$, with $MCH_j$ corresponding to $M_j$. The words are connected as a linear array, and they are used to hold the channel numbers. $MAR_1$ 218 and $MAR_2$ 220 are address registers for holding addresses for accessing $M$ and $MCH$. $MDR$ 222 and $MCHR$ 224 are data registers used to access $M$ and $MCHR$ along with the $MARs$.

Associative processor $P_M$ supports the following major operations that are used in the efficient implementation of the LAUC-VF channel scheduling operations:

**RANDOM-READ:** Given address $x$ in $MAR_1$, do $MDR_1 \leftarrow M_x$, $MCHR \leftarrow MCH_x$.
**RANDOM-WRITE:** Given address $x$ in $MAR_1$, do $M_x \leftarrow MDR$, $MCH_x \leftarrow MCHR$.
**PARALLEL-SEARCH:** The value of MC is compared with the values of all word $M_1, M_2, .., M_k$ simultaneously (in parallel). Find the smallest $j$ such that $M_j < MC$, and do $MAR_1 \leftarrow j$, $MDR_1 \leftarrow Mj$, and $MCHR \leftarrow MCH_j$. If there does not exist any word $M_j$ such that $M_j < MC$, $MAR_1 = 0$ after this operation.
**SEGMENT-SHIFT-DOWN:** Given addresses $a$ in $MAR_1$, and $b$ in $MAR_2$ such that $a < b$, perform $M_{j+1} \leftarrow M_j$ and $MCH_{j+1} \leftarrow MCH_j$ for all $a \leq j < b$.

For RANDOM-READ, RANDOM-WRITE and SEGMENT-SHIFT-DOWN operations, each pair $(M_j, MCH_j)$ is treated as a superword. The output of PARALLEL-SEARCH consists $r$ binary signals, $MFLAG_i$, $1 \leq i \leq r$. $MFLAG_i = 1$ if and only if $M_i \leq MC$. There is a priority encoder with $MFLAG_i$, $1 \leq i \leq r$, as input, and it produces an address $j$ and this value is loaded into $MAR_1$ when PARALLEL-SEARCH operation is completed. RANDOM-READ, RANDOM-WRITE, PARALLEL-SEARCH and SEGMENT-SHIFT-DOWN operations are used to maintain the non-increasing order of values stored in $M$.

Figure 21 illustrates a block diagram of the associative processor $P_G$ 92. A $P_G$ is used to store unused gaps of all channels of an outbound link of a core router. A gap is represented by a pair $(l, r)$ of integers, where $l$ and $r$ are the beginning and the end of the gap, respectively. Associative processor $P_G$ includes associative memory $G$ 93, comparand register $GC$ 230, memory $GCH$ 232, address register $GAR$ 234, data registers $GDR$ 236 and $GCHR$ 238 and working registers $GR_1$ 240 and $GR_2$ 242.

$G$ is an associative memory of $n$ words, $G_1, G_2..., G_n$, with each $G_i$ consisting of two sub-words $G_{i,1}$ and $G_{i,2}$.

The words are connected as a linear array. *GC* holds a word of two sub-words, $GC_1$ and $GC_2$. *GCH is* a memory of n words, $GCH_1$, $GCH_2$,..., $GCH_n$ with $GCH_j$ corresponding to $G_j$. The words are connected as a linear array, and they are used to hold the channel numbers. *GAR* is an address register used to hold address for accessing *G. GDR,* and *GCHR* are data registers used to access *M* and *MCHR,* together with *GAR.*

Associative processor $P_G$ supports the following major operations that are used in the efficient implementation of the LAUC-VF channel scheduling operations:

**RANDOM-WRITE:** Given address x in *GAR,* do $G_{x,1} \leftarrow GDR_1$, $G_{x,2} \leftarrow GDR2$, $GCH_x \leftarrow GCHR$.

**PARALLEL-DOUBLE-COMPARAND-SEARCH:** The value of *GC* is compared with the values of all word *G1, G2,..., Gn* simultaneously (in parallel). Find the smallest *j* such that $G_{j,1} < GC_1$ and $G_{j,2} > GC_2$. If this operation is successful, then do $GDR_1 \leftarrow G_{j,1}$, $GDR_2 \leftarrow G_{j,2}$, $GCHR \leftarrow GCH_j$, and $GAR \leftarrow j$; otherwise, $GAR \leftarrow 0$.

**PARALLEL-SINGLE-COMPARAND-SEARCH:** The value of $GC_1$ is compared with the values of all word $G1, G2,...,G_n$ simultaneously (in parallel). Find the smallest *j* such that $G_{j,1} > GC_1$ and *j* in a register *GAR.* If this operation is successful, then do $GDR_1 \leftarrow G_{j,1}$, $GDR_2 \leftarrow G_{j,2}$, $GCHR \leftarrow GCHj$, and $GAR \leftarrow j$; otherwise, $GAR \leftarrow 0$.

**BIPARTITION-SHIFT-UP:** Given *address* a in GAR, shift the content of $G_{j+1}$ to $G_j \leftarrow G_{j+1}$, $GCH_j \leftarrow GCH_{j+1}$, $GCH_j$ to $GCH_{j+1}$ for a $\leq$ *j* <n, and $G_{n,1} \leftarrow 0$, $G_{n,2} \leftarrow 0$.

**BIPARTITION-SHIFT-DOWN:** Given address *a* in GAR, do $G_{j+1} \leftarrow G_j$, $GCH_{j+1} \leftarrow GCHj$, $a \leq j < n$.

In $P_G$, a triple $(G_{i,1}, G_{i,2}, GCH_i)$ corresponds to a gap with beginning time $G_{i,1}$ and ending time $G_{i,2}$ on channel $GCH_i$. For RANDOM-WRITE, PARALLEL-DOUBLE-COMPARAND-SEARCH, PARALLEL-SINGLE-COMPARAND-SEARCH, BIPARTITION-SHIFT-UP, and BIPARTITION-SHIFT-DOWN operations, each triple $(G_{i,1}, G_{i,2}, GCH_i)$ is treated as a superword. The output of PARALLEL-DOUBLE-COMPARAND-SEARCH (resp. PARALLEL-SINGLE-COMPARAND-SEARCH) operation consists *n* binary signals, $GFLAG_i$, $1 \leq i \leq n$, such that $GFLAG_i = 1$ if and only if $G_{i,1} \geq GC_1$ and $G_{i,2} \leq GC_2$ (resp. $G_{i,1} \geq GC_1$). There is a priority encoder with $GFLAG_i$, $1 \leq i \leq n$, as input, and it produces an address *j* and this value is loaded into $GAR_1$ when the operation is completed. RANDOM-WRITE, PARALLEL-SINGLE-COMPARAND-SEARCH, BIPARTITION-SHIFT-UP, and BIPARTITION-SHIFT-DOWN operations maintain the non-increasing order of values stored in $G_{i,1}s$.

The operations of $P_M$ and $P_G$ are discussed in greater detail in U.S. Ser. No. 09/689,584.

Figure 22 illustrates a block diagram of a processor $P_{MG}$, which combines the functions of the $P_M$ and $P_G$ processors described above. $P_{MG}$ includes associative memory *MG* 248, comparand register *MGC* 250, memory *MGCH* 252, address registers $MGAR_1$ 254a and $MGAR_2$ 254b, and data registers *MGDR* 256 and *MGCHR* 258.

*MG* is an associative memory of $m = r$ + n words, $MG_1$, $MG_2$,..., $MG_m$, with each $MG_i$ consisting of two sub-words $MG_{i,1}$ and $MG_{i,2}$. The words are also connected as a linear array. *MGC* is a comparand register that holds a word of two sub-words, $MGC_1$ and $MGC_2$. *MGC* also holds a word of two sub-words, $MGC_1$ and $MGC_2$. *MGCH* is a memory of *m* words, $MGCH_1$, $MGCH_2$,..., $MGCH_m$ with $MGCH_j$ corresponding to $MG_j$. The words are connected as a linear array, and they are used to hold the channel numbers.

Associative processor $P_{MG}$ supports the following major operations:

**RANDOM-READ:** Given address x in $MGAR_1$, do $MGDR_1 \leftarrow MG_{i,1}$, $MGDR_2 \leftarrow MG_{i,2}$, MCHR $\leftarrow MGCH_x$.

**RANDOM-WRITE:** Given address x in *MGAR,* do $MG_{x,1} \leftarrow MGDR_1$, $MG_{x,2} \leftarrow MGDR_2$, $MGCH_x \leftarrow MGCHR$.

**PARALLEL-COMPOUND-SEARCH:** In parallel, the value of $MGC_1$ is compared with the values of all superwords $MG_i$, $1 \leq i \leq m$, and the values of $MGC_1$ and $MGC_2$ are compared with all super words $MG_j$, $r + 1 \leq j \leq m$, in parallel. (i) If $MGC_2 \neq 0$, then do the following in parallel: Find the smallest *j'* such that $j' \leq r$ and $MG_{j'}$, $1 < MGC_1$. If this search is successful, then do $MGAR_1 \leftarrow j'$; otherwise, $MGAR_1 \leftarrow 0$. Find the smallest *j"* such that $r + 1 \leq j" \leq m$, $MG_{j,1} < MGC_1$ and $MG_{j,2} > MGC_2$. If this search is successful, then do $MGAR_2 \leftarrow j"$ and $MGCHR \leftarrow MGCH_i$; otherwise $MGAR_2 \leftarrow 0$. (ii) If $MGC_2 = 0$, then find the smallest *j'* such that $1 \leq j' \leq m$ and $MG_{j'}, 1 < MGC_1$. $MG_{j,2} > MGC_2$. If this search is successful, then do $MGAR_1 \leftarrow j"$ and $MGCHR \leftarrow MGCH_i$; otherwise $MGAR_1 \leftarrow 0$.

**BIPARTITION-SHIFT-UP:** Given address *a* in $MGAR_1$, do $MG_j \leftarrow MG_{j+1}$, $MGCH_j \leftarrow MGCH_{j+1}$, MGCH, to $MGCH_{j+1}$ for a $\leq$ *j* < m, and $MG_{n,1} \leftarrow 0$, $MG_{n,2} \leftarrow 0$.

**SEGMENT-SHIFT-DOWN:** Given addresses *a* in $MGAR_1$, and *b* in $MGAR_2$ such that $a < b$, perform $MG_{j+1} \leftarrow MG_j$ and $MGCH_{j+1} \leftarrow MGCHj$ for all $a \leq j < b$.

As in $P_G$, a triple $(MG_{i,1}, MG_{i,2}, MGCH_i)$ may correspond to a gap with beginning time $MG_{i,1}$ and ending time $MG_{i,2}$ on channel $MGCH_i$. But in such a case, it must be that i > r. If $i \leq r$, then $MG_{i,2}$ is immaterial, the pair $(MG_{i,1}, MGCH_i)$ is interpreted as the unscheduled time $MG_{i,1}$ on channel $MGCH_i$, and this pair corresponds to a word in $P_M$. For RANDOM-READ, RANDOM-WRITE, PARALLEL-COMPOUND-SEARCH, BIPARTITION-SHIFT-UP and SEGMENT-SHIFT-DOWN operations, each triple $(MG_{i,1}, MG_{i,2},..., MGCH_i)$ is treated as a superword. The first r superwords are used for storing the unscheduled times of *r* outbound channels, and the last $m - r$ superwords are used to store information about gaps on all outbound channels.

The output of PARALLEL-COMPOUND-SEARCH operation consists of binary signals $MGFLAG_i$ whose values are defined as follows: (i) if $MGC_2 = 0$ and $MG_{i,1} \geq MGC_1$ then $MGFLAG_i = 1$; (ii) if $MGC_2 \neq 0$, $i \leq r$, $MG_{i,1} \geq MGC_1$ then $MGFLAG_i = 1$; (iii) if $MGC_2 \neq 0$, $i > r$, $MG_{i,1} \geq MGC_1$ and $MG_{i,2} \leq MGC_2$ then $MGFLAG_1 = 1$, or if $MG_{i,1} \geq MGC_1$ and $i \leq r$ then $MGFLAG_i = 1$; and (iv) otherwise, $MGFLAG_i = 0$.

There are two encoders. The first one uses $MGFLAG_i$, $1 \leq i \leq r$, as its input, and it produces an address in $MGAR_1$ after a PARALLEL-COMPOUND-SEARCH operation is performed if $MGC_2 \neq 0$. The second encoder uses $MGFLAG_i$, $r + 1 \leq i \leq$ m, as its input. It produces an address in $MGAR_2$ after a PARALLEL-COMPOUND-SEARCH operation is performed if $MGC_2 \neq 0$. There is a selector with the output of the two encoders as its input. If $MGC_2 = 0$, the smallest non-zero address produced by the two encoders, if such an address exists, Ys loaded into $MGAR_1$ after a PARALLEL-COMPOUND-SEARCH operation is performed; otherwise, $MGAR_1$ is set to 0 after a PARALLEL-COMPOUND-SEARCH operation is performed; If $MGC_2 \neq 0$, the output of the selector is disabled.

RANDOM-READ, RANDOM-WRITE, PARALLEL-COMPOUND-SEARCH1, BIPARTITION-SHIFT-UP and SEGMENT-SHIFT-DOWN operations are used to maintain the non-increasing order of values stored in $MG_{i,1}$ of the first m words, and the non-increasing order of the values stored in $MG_{i,1}$ of the last $m - r$ words.

The operations of associative processors $P_M$ and $P_G$ can be carried out by operations of $P_{MG}$ without any delay when they are used to implement LAUC-VF channel scheduling method. We assume that $P_{MG}$ contains $m = r + n$ superwords. In Table 3 (resp. Table 4), the operations of $P_M$ (resp. $P_G$) given in the left column are carried out by operations of $P_{MG}$ given the right column. Instead of searching $P_M$ and $P_G$ concurrently, using $P_{MG}$, this step can be carried out by PARALLEL-COMPOUND-SEARCH operation.

Table 3:

| Simulation of $P_M$ by $P_{MG}$ | |
|---|---|
| $P_M$ | $P_{MG}$ |
| RANDOM-READ | RANDOM-READ |
| RANDOM-WRITE | RANDOM-WRITE |
| PARALLEL-SEARCH | PARALLEL-COMPOUND-SEARCH |
| SEGMENT-SHIFT-DOWN | SEGMENT-SHIFT-DOWN (with_$MGAR_2 = m$) |

Table 4:

| Simulation of $P_G$ by $P_{MG}$ | |
|---|---|
| $P_G$ | $PMG$ |
| RANDOM-WRITE | RANDOM-WRITE |
| PARALLEL-DOUBLE-COMPARAND-SEARCH | PARALLEL-COMPOUND-SEARCH |
| PARALLEL-SINGLE-COMPARAND-SEARCH | PARALLEL-COMPOUND-SEARCH (with $MGC_2 = 0$) |
| BIPARTITE-SHIFT-UP | SEGMENT-SHIFT-UP (with $MGAR_2 = m$) |
| BIPARTITE-SHIFT-DOWN | SEGMENT-SHIFT-DOWN (with $MGAR_2 = m$ -1) |

In the LAUC-VF method, fitting a given DB into a gap is preferred, even the DB can be scheduled on another channel after its unscheduled time, as shown by the example of Figures 17a-b. With separate $P_M$ and $P_G$ and performing search operations on $P_M$ and $P_G$ simultaneously, this priority is justifiable. However, the overall circuit for doing so may be considered too complex.

By combining $P_M$ and $P_G$ into one associative processor, simpler and faster variations of this LAUC-VF methods are possible. An alternative embodiment is shown in Figure 23. In this figure, processor $P^*_{MG}$ 270 includes an array $TYPE$ 272 with m bits, each bit being associated with a corresponding word in memory $MG$. If $TYPE_i = 1$ then $MG_i$ stores an item of $S'_M$ otherwise, $MG_i$ stores an item of $S'_G$. Further, register $TYPER$ 274 is a one-bit register used to access $TYPE$, together with $MGAR_1$ and $MGAR_2$.

Other differences between $P^*_{MG}$ and $P_{MG}$ include the priority encoder used and the operations supported. When a new DB is scheduled, $MG$ is searched. The fitting time interval found, regardless if it is a gap or a semi-infinite interval, will be used for the new DB. Once the DB is scheduled, one more gap may be generated. As long as there is sufficient space in $MG$, the new gap is stored in $MG$. When $MG$ is full, an item of $S'_G$ may be lost. But it is enforced that all items of $S'_M$ must be kept.

Let $t_s^{out}(DB_i)$ and $t_e^{out}(DB_i)$ be the transmitting time of the first and last slot of $DB_i$ at the output of the router, respectively. Then

$$t_s^{out}(DB_i) = T_i + L_j$$

and

$$t_e^{out}(DB_i) = T_i + L_j + length(DB_i),$$

where $T_i$ is the relative arrival time defined above, $L_j$ is the FDL delay time selected for $DB_j$ in the switching matrix and length($DB_2$) is the length of $DB_i$ in terms of number of slots. Assume that there are $q+1$ FDLs $L_0$, $L_1$,..., $L_q$ in the DB switching matrix such that $L_0 = 0 < L_1 < L_2 < ... < L_{q-i} < L_q$. The new variation of LAUC-VF is sketched as follows:

```
method CHANNEL-SCHEDULING
begin
success ← 0;
for j = 0 to q do
        MGC₁ ← Tᵢ+Lⱼ
        MGC₂ ← Tᵢ + Lⱼ + length(DBᵢ);
        perform PARALLEL-COMPOUND-SEARCH using P*MG;
        if MGAR₁ ≠ 0 then
        if MGAR₁ ≠ 0 then
        begin
        output MGCHR as the number of the channel for transmitting DBᵢ
            output Lⱼ as the selected FDL delay time for DBᵢ;
        update MG of P*MG using the values in MGC₁ and MGC₂
        success ← 1;
        exit /* exit the for-loop */
        end
    endfor
    if success = 0 then drop DBᵢ/* scheduling for DBᵢ is failed */
    end
```

Once a DB is scheduled, $MG$ is updated. When a gap is to be added into $MG$, and $TYPE_m = 1$, the new gap is ignored. This ensures that no item belonging to $S'_M$ is lost.

Associative processor $P^*_{MG}$ supports the following major operations:

**RANDOM-READ:** Given address $x$ in $MGAR_1$, do $MGDR_1 \leftarrow MG_{i,1}$, $MGDR_2 \leftarrow MG_{i,2}$, $MCHR \leftarrow MGCH_x$, $TYPER \leftarrow TYPE_x$.

**RANDOM-WRITE:** Given address $x$ in $MGAR_1$, do $MG_{x,1} \leftarrow MGDR_1$, $MG_{x,2} \leftarrow MGDR2$, $MGCH_x \leftarrow MGCHR$, $TYPE_x \leftarrow TYPER$.

**PARALLEL-COMPOUND-SEARCH:** The value of $MGC_1$ is compared with the values of all superwords $MG_i$, $1 \le i \le m$, and $MGC_2$ are compared with all super words $MG_i$, $1 \le i \le m$, whose $TYPE_i = 0$, in parallel. Find the smallest $j$ such that $TYPE_j = 1$ and $MG_{j,1} < MGC_1$, or $TYPE_j = 0$, $MG_{j,1} < MGC_1$ and $MG_{j,2} > MGC_2$. If this search is successful, then do $MGAR_1 \leftarrow j$; $TYPER \leftarrow TYPE_j$, $MGCH \leftarrow MGCH_j$; otherwise, otherwise $MGAR_1 \leftarrow 0$.

**BIPARTITION-SHIFT-UP, SEGMENT-SHIFT-DOWN:** same as in $P_{MG}$.

In operation, The value of $TYPE_i$ indicates the type of information stored in $MG_i$. As in $P_G$, a triple $(MG_{i,1}, MG_{i,2}, MGCH_i)$ may correspond to a gap with beginning time $MG_{i,1}$ and ending time $MG_{i,2}$ on channel $MGCH_i$. But in such a case, it must be that $TYPE_i = 0$. If $TYPE_i = 1$, then $MG_{i,2}$ is immaterial, the pair $(MG_{i,1}, MGCH_i)$ is interpreted as the unscheduled time $MG_{i,1}$ on channel $MGCH_i$, and this pair corresponds to a word in $P_M$. For RANDOM-READ, RANDOM-WRITE, PARALLEL-COMPOUND-SEARCH, BIPARTITION-SHIFT-UP and SEGMENT-SHIFT-DOWN operations, each quadruple $(MG_{i,1}, MG_{i,2}, TYPE_i, MGCH_i)$ is treated as a superword.

The output of PARALLEL-COMPOUND-SEARCH operation consists of binary signals $MGFLAG_i$ whose values are defined as follows. If $MGC_2 \neq 0$, $TYPE = 0$, $G_{i,1} \geq GC_1$ and $G_{i,2} \leq GC_2$ then $MGFLAG_i = 1$. If $MGC_2 = 0$ and $G_{i,1} \geq GC_1$ then $MGFLAG = 1$. Otherwise, $MGFLAG_i = 0$. There is a priority encoders. If $MGFLAG_i$, $1 \leq i \leq m$, as its input, and it produces an address in $MGAR_1$ after a PARALLEL-COMPOUND-SEARCH operation is performed.

RANDOM-READ, RANDOM-WRITE, PARALLEL-COMPOUND-SEARCH, BIPARTITION-SHIFT-UP and SEGMENT-SHIFT-DOWN operations are used to maintain the non-increasing order of values stored in $MG_{i,1}s$.

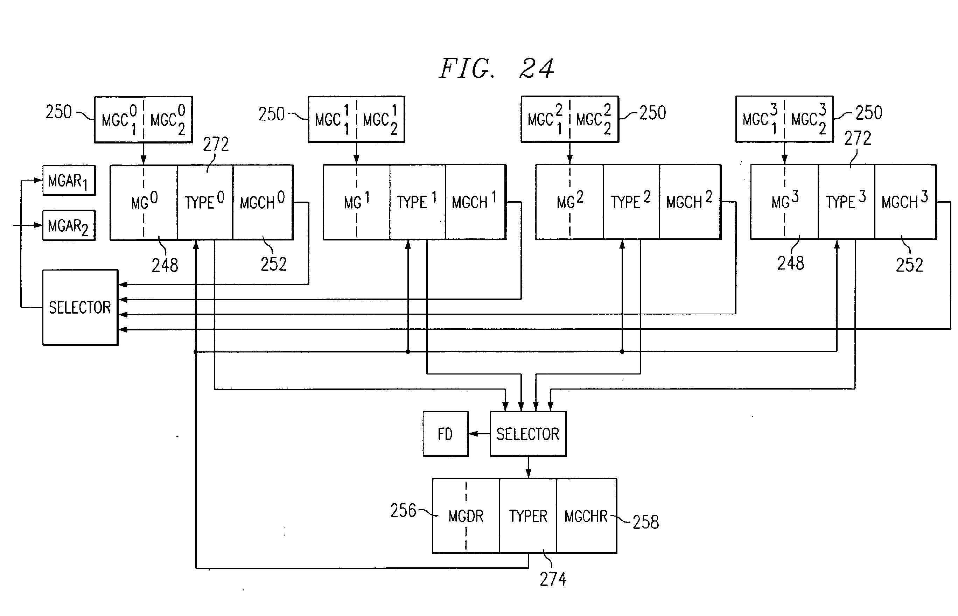

Figure 24 illustrates the use of multiple associative processors for fast scheduling. Channel scheduling for an OBS core router is very time critical, and multiple associative processors (shown in Figure 24 as $P^*_{MG}$ processors 270), which are parallel processors, are proposed to implement scheduling methods. Suppose that there are $q + 1$ FDLs $L_0 = 0$, $L_1$, ..., $L_q$ in the DB switching matrix such that $L_0 < L_1 < ... < L_q$. These FDLs are used, when necessary, to delay DBs and increase the possibility that the DBs can be successfully scheduled. In the implementation of the LAUC-VF method presented in U.S. Ser. No.09/689,584, the same pair of $P_M$ and $P_G$ are searched repeatedly using different FDLs until a scheduling solution is found or all FDLs are exhausted. The method CHANNEL-SCHEDULING described above uses the same idea.

To speed up the scheduling, a scheduler 42 may use $q + 1$ $P_M/P_G$ pairs, one for each $L_i$. At any time, all $q + 1$ Ms have the same content, all $q + 1$ MCHs have the same content, all $q + 1$ Gs have the same content, and all $q + 1$ GCHs have the same content. Then finding a scheduling solution for all different FDLs can be performed on these $P_M/P_G$ pairs simultaneously. At most one search result is used for a DB. All $P_M/P_G$ pairs are updated simultaneously by the same lock-step operations to ensure that they store the same information. Similarly, one may use $q + 1$ $P_{MG}s$ or $P^*_{MG}s$ to speed up the scheduling.

In Figure 24, a multiple processor system 300 uses $q + 1$ $P^*_{MG}s$ 270 implement the method CHANNEL-SCHEDULING described above. Similarly, the LAUC-VF method can be implemented using multiple $P_M/P_G$ pairs, or multiple $P_{MG}s$ in a similar way to achieve better performance. The multiple $P^*_{MG}s$ 270 include $q + 1$ associative memories $MG^0$, $MG^1$,..., $MG^q$. Each $MG^j$ has $m$ words $MG^j_1$, $MG^j_2$, ..., $MG^j_m$, with each $MG^j_i$ consisting of two sub-words $MG^j_{i,1}$ and $MG^j_{i,2}$. There are $q + 1$ comparand registers $MGC^0$, $MGC^1$,..., $MGC^q$. Each $MGC^j$ holds a word of two sub-words, $MGC^j_1$ and $MGC^j_2$. MGCHs: There are $q + 1$ associative memories $MGCH^0$, $MGCH^1$,..., $MGCH^q$. Each $MGCH^j$ has $m$ words, $MGCH^j_1$, $MGCH^j_2$,..., $MGCH^j_m$. The words in $MGCHi$ are connected as a linear array. There are $q + 1$ linear arrays $TYPE^0$, $TYPE^1$,..., $TYPE^q$, where $TYPE^j$ has $m$ bits, $TYPE^j_1$, $TYPE^j_2$, ...$TYPE^j_m$. $MGAR_1$, $MGAR$ are address registers used to hold address for accessing $MG$ and $MGCH$. $MGDR$, $TYPER$, $MGCH$ are: data registers used to access $MGs$, $TYPEs$ and $MGCHR$.

This multiple processor system 300 supports the following major operations:

> **RANDOM-READ:** Given address $x$ in $MGAR_1$, do $MGDR_1 \leftarrow MG^0_{i,1}$, $MGDR_2 \leftarrow MG^0_{i,2}$, $MCHR \leftarrow MGCH^0_x$, $TYPER \leftarrow TYPE^0_x$.
>
> **RANDOM-WRITE:** Given address $x$ in $MGAR_1$, do $MG^j_{x,1} \leftarrow MGDR_1$, $MG^j_{x,2} \leftarrow MGDR_2$, $MGCH^j_x \leftarrow MGCHR$, $TYPE^j_x \leftarrow TYPER$, for $0 \leq j \leq q$.
>
> **PARALLEL-COMPOUND-SEARCH:** For $0 \leq j \leq q$, the value of $MGC^j_1$ is compared with the values of all superwords $MG^j_1$, $1 \leq i \leq m$, and $MGC^j_2$ are compared with all super words $MG^j_i$, $1 \leq i \leq m$, whose $TYPE^j_i = 0$, in parallel. For $0 < j < q$, find the smallest $k_j$, such that $TYPE^j_{kj,1} = 1$ and $MG^j_{kj,1} < MGC^j_1$, or $TYPE^j_{kj} = 0$, $MG^j_{kj,1} < MGC^j_1$ and $MG^j_{kj,2} > MGCj_2$. If this search is successful, let $l_j = 1$; otherwise let $l_j = 0$. Find $FD = \min\{j \mid l_j = 1, 0 \leq j \leq q\}$. If such $l$ exists, then do $j \leftarrow FD$, $MGAR_1 \leftarrow k_j$, $TYPER \leftarrow TYPE^j_{kj}$, $MGCH \leftarrow MGCH^j_{kj}$; otherwise, otherwise $MGAR_1 \leftarrow 0$.
>
> **BIPARTITION-SHIFT-UP:** Given address $a$ in $MGAR_1$, for $0 \leq j \leq q$, do $MG^j_i \leftarrow MG^j_{i+1}$ $MGCH^j_i \leftarrow MGCH^j_{i+1}$, $MGCH^j_i$ to $MGCH^j_{i+1}$, for $a \leq i < m$, and $MG^j_{n,1} \leftarrow 0$, $MG^j_{n,2} \leftarrow 0$.
>
> **SEGMENT-SHIFT-DOWN:** Given addresses $a$ in $MGAR_1$, and $b$ in $MGAR_2$ such that $a < b$, for $0 \leq j \leq q$ do $MG^j_i \leftarrow MG^j_i$ and $MGCH^j_{i+1} \leftarrow MGCH^j_i$ for all $a \leq j < b$.

A RANDOM-READ operation is performed on one copy of $P^*_{MG}$, i.e. $MG^0$, $TYPE^0$, and $MGC^j$. RANDOM-WRITE, PARALLEL-COMPOUND-SEARCH, BIPARTITION-SHIFTUP and SEGMENT-SHIFT-DOWN operations are performed on all copes of $P^*_{MG}$. For RANDOM-READ, RANDOM-WRITE, PARALLEL-COMPOUND-SEARCH, BIPARTITION-SHIFT-UP and SEGMENT-SHIFT-DOWN operations, each quadruple $(MG_{i,1}, MG_{i,2}, TYPE_i, MGCH_i)$ is treated as a superword. When a PARALLEL-COMPOUND-SEARCH operation is performed, the output of all $P^*_{MG}$ copies are the input of selectors. The output of one $P^*_{MG}$ copy is selected.

The CHANNEL-SCHEDULING method may be implemented in the multiple processor system as:

```
method PARALLEL-CHANNEL-SCHEDULING
begin
    success ← 0;
    for j = 0 to q do in parallel
        MGCⁱ₁ ← Tᵢ+Lⱼ
        MGCⁱ₂ ← Tᵢ+Lⱼ+ length(DBᵢ);
    endfor
    perform PARALLEL-COMPOUND-SEARCH;
    if MGAR₁ ≠ 0 then
        begin
        output MGCHR as the number of the channel for transmitting DB₂;
        output L, as the selected FDL delay time for DBᵢ
        k ≤ FD;
        for j = 0 to q do in parallel
            update MGʲ, 0 ≤j ≤q, using the values in MGCDRᵏ₁ and MGDRᵏ₂
        endfor
        success ← 1;
    end
    if success = 0 then drop DBᵢ /* scheduling for DBᵢ is failed */
end
```

It may be desirable to be able to partition the *r* data channels into groups and choose a particular group to schedule DBs. Such situations may occur in several occasions. For example, one may want to test a particular channel. In such a situation, the channel to be tested by itself forms a channel group, and all other channels form another group. Then, channel scheduling is only performed on the 1-channel group. Another occasions is that during the operation of the router, some channels may fail to transmit DBs. Then, the channels of the same outbound link can be partitioned into two groups, the group that contains all failed channels, and the group that contains all normal channels, and only normal channels are to be selected for transmitting DBs. Partitioning data channels also allows channel reservation, which has applications in quality of services. Using reserved channel groups, virtual circuits and virtual networks can be constructed.

To incorporate group partition feature into channel scheduling associative processors, the basic idea is to associate a group identifier (or gid for short) with each channel. For a link, all the channels share the same gid belong to the same group. The gid of a channel is programmable; i.e. it can be changed dynamically according to need. The gid for a DB can be derived from its BHP and/or some other local information.

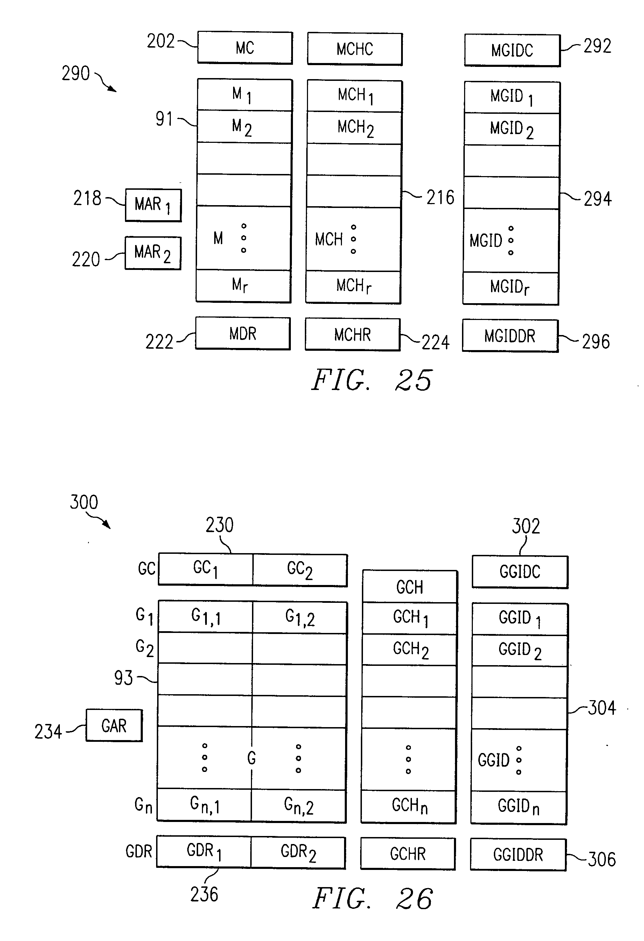

The design of $P_M$ and $P_G$ to $P_{M\text{-}ext}$ and $P_{G\text{-}ext}$ may be extended to incorporate multiple channel groups, as shown in Figures 25 and 26, respectively. As shown in Figure 25, associative processor $P_{M\text{-}ext}$ 290 includes *M, MC, MCH, MAR₁, MAR₂, MDR, MCHR,* as described in connection with Figure 20. *MCIDC 292* is a comparand register that holds the gid for comparison. *MGID 294* is a memory of *r* words, $MGID_1, MGID_2,..., MGID_r$, with $MGID_j$ corresponding to $M_j$ and $MCH_j$. The words are connected as a linear array, and they are used to hold the channel group numbers. *MGIDDR 296* is a data register.

$P_{M\text{-}ext}$ is similar to $P_M$ with the addition of several components, and modifying operations. The linear array MGID has *r* locations, $MGID_1, MGID_2,..., MGID_r$; each is used to store an integer gid. $MGID_i$ is associated with $M_i$ and $MCH_i$, i.e. a triple $(M_i, MCH_i, MGID_i)$ is treated as a superword. Comparand register *MGIDC* and data register *MGIDDR* are added.

Associative processor $P_{M\text{-}ext}$ supports the following major operations that are used in the efficient implementation of the LAUC-VF channel scheduling operations.

**RANDOM-READ:** Given address *x* in $MAR_1$, do $MDR \leftarrow M_x$, $MCH_x \leftarrow MCHR$ and $GIDR \leftarrow MGID_x$.
**RANDOM-WRITE:** Given address *x* in $MAR_1$, do $M_x \leftarrow MDR$, $MCH_x \leftarrow MCHR$ and $MGID_i \leftarrow MGIDDR$.

**PARALLEL-SEARCH1: Simultaneously,** $MGIDC$ is compared with the values of $MGID_1$, $MGID_2$,..., $MCIDr$). Find $j$ such that $MGID$, = $MGIDC$, and do $MAR_1 \leftarrow j$, $MDR_1 \leftarrow M_j$, $MCHR \leftarrow MCH_j$, and $MGIDDR \leftarrow MGID+j$.

**PARALLEL-SEARCH2: Simultaneously,** $(MC, MGIDC)$ is compared with $(M_1, MGID_1)$, $(M_2, MGID_2)$, ..., $(M_r, MGID_r)$ Find the smallest $j$ such that $M_j < MC$ and $MGID_j = GIDC$, and do $MART_1 \leftarrow j$, $MDR_1 \leftarrow M_j$, $MCHR \leftarrow MCHj$, and $MGIDDR \leftarrow MGID_j$. If there does not exist any word $(M_j, MGID_j)$ such that $M_j < MC$ and $MGID_j = GIDC$, $MAR_1$ = 0 after this operation.

**SEGMENT-SHIFT-DOWN:** Given addresses $a$ in $MAR_1$, and $b$ in $MAR_2$ such that a < b, perform $M_{j+1} \leftarrow M_j$, $MCH_{j+1} \leftarrow MCH_j$ and $MGID_{y+1} \leftarrow MGID_j$. for all $a \leq j < b$.

For RANDOM-READ, RANDOM-WRITE and SEGMENT-SHIFT-DOWN operations, each triple $(M_j, MCH_j, MGID_j)$ is treated as a superword. The output of PARALLEL-SEARCH1 consists $r$ binary signals, $MFLAG_i$, $1 \leq i \leq$ r. $MFLAG_i$ = 1 if and only if $MGID_i = MGIDC$. There is a priority encoder with $MFLAG_i$, $1 \leq i \leq r$, as input, and it produces an address $j$ and this value is loaded into $MAR_1$ when PARALLEL-SEARCH1 operation is completed. The output of PARALLEL-SEARCH2 consists r binary signals, $MFLAG_i$, $1 \leq i \leq r$. $MFLAG_i$ = 1 if and only if $M_i \leq MC$ and $MGID_i = MGIDC$. The same priority encoder used in PARALLEL-SEARCH 1 transforms $MFLAG_i$, $1 \leq i \leq r$, into an address $j$ and this value is loaded into $MAR_1$ when PARALLEL-SEARCH operation is completed. RANDOM-READ, RANDOM-WRITE, PARALLEL-SEARCH2 and SEGMENT-SHIFT-DOWN operations are used to maintain the non-increasing order of values stored in M.

Figure 26 illustrates a block diagram of $P_{G\text{-}ext}$. $P_{G\text{-}ext}$ 300 includes $G, GC, GCH, GAR, GDR, GCHR$, as described in connection with Figure 21. $GGIDC$ 302 is a comparand register for holding the gid for comparision. $GGID$ 304 is a memory of $r$ words, $GGID_1$, $GGID_2$,..., $GGID_r$, with $GGID_j$ corresponding to $G_j$ and $GCH_j$. The words are connected as a linear array, and they are used to hold the channel group numbers. $GGIDR$ 306 is a data register.

Similar to the architecture of $P_{M\text{-}ext}$, a linear array GGID of $n$ words, $GGID_1$, $GGID_2$,..., $GGID_n$ is added to $P_G$. A quadruple $(G_{i,1}, G_{i,2}, MCH_i, GGID_i)$ is treated as a superword.

Associative processor $P_{G\text{-}ext}$ supports the following major operations that are used in the efficient implementation of the LAUC-VF channel scheduling operations.

**RANDOM-WRITE:** Given address $x$ in $GAR$, do $G_{x,1}, \leftarrow GDR_1$, $G_{x,2} \leftarrow GDR_2$, $GCH_x \leftarrow GCHR$, $GGID_x \leftarrow GGIDR$.

**PARALLEL-DOUBLE-COMPARAND-SEARCH:** The value of $(GC, GGIDC)$ is compared with $(G_1, GGID_1)$, $(G_2, GGID_2)$,..., $(G_n, GGID_n)$ simultaneously (in parallel). Find the smallest $j$ such that $G_{j,1} < GC_1$, $G_{j,2} > GC_2$ and $GGID_j = GGIDC$. If this operation is successful, then do $GDR_1 \leftarrow G_{j,1}$, $GDR_2 \leftarrow G_{j,2}$, $GCHR \leftarrow GCHj$, $GGIDR \leftarrow GGIDj$ and $GAR \leftarrow j$; otherwise, $GAR \leftarrow 0$.

**PARALLEL-SINGLE-COMPARAND-SEARCH:** $(GC_1, GGIDC)$ is compared with $(G_{1,1}, GGID_1)$, $(G_{2,1}, GGID_2)$, ..., $(G_{n,1}, GGID_n)$ simultaneously (in parallel). Find the smallest $j$ such that $G_{j,1} > GC_1$ and $GGID_j = GGIDC$. If this operation is successful, then do $GDR_1 \leftarrow G_{j,1}$, $GDR_2 \leftarrow G_{j,2}$, $GCHR \leftarrow GCH_j$, $GGIDR \leftarrow GGID$, and $GAR \leftarrow j$; otherwise, $GAR \leftarrow 0$.

**BIPARTITION-SHIFT-UP:** Given address $a$ in $GAR$, shift the content of $G_{j+1}$ to $G_j \leftarrow G_{j+1}$, $GCH_j \leftarrow GCH_{j+1}$, $GCH_j$ to $GCH_{j+1}$, $GGID$, to $GGID_{j+1}$, for $a \leq j \leq n$, and $G_{n,1} \leftarrow 0$, $G_{n,2} \leftarrow 0$.

**BIPARTITION-SHIFT-DOWN:** Given address $a$ in $GAR$, do $G_{j+1} \leftarrow Gj$, $GCH_{j+1} \leftarrow CCH_j$, $GGID_{j=1} \leftarrow GCID_j$, $a \leq j < n$.

A quadruple $(G_{i,1}, G_{i,2}, GCH_i, GGID_i)$ corresponds to a gap with beginning time $G_{i,1}$ and ending time $G_{i,2}$ on channel $CCH_i$, whose gid is in $GGID_i$. For RANDOM-WRITE, PARALLEL-DOUBLE-COMPARAND-SEARCH, PARALLEL-SINGLE-COMPARAND-SEARCH, BIPARTITION-SHIFT-UP, and BIPARTITION-SHIFT-DOWN operations, each quadruple $(G_{i,1}, G_{i,2}, GCH_i, GGID_i)$ is treated as a superword. The output of PARALLEL-DOUBLE-COMPARAND-SEARCH (resp. PARALLEL-SINGLECOMPARAND-SEARCH) operation consists n binary signals, $GFLAG_i$, $1 \leq i \leq n$, such that $GFLAG_i$ = 1 if and only if $G_{i,1} \geq GC_1$ and $G_{i,2} \leq GC_2$ (resp. $G_{i,1} \geq GC_1$), $GGID_i = GGIDC$. There is a priority encoder with $GFLAG_i$, $1 \leq i \leq n$, as input, and it produces an address $j$ and this value is loaded into GAR, when the operation is completed. RANDOM-WRITE, PARALLEL-SINGLE-COMPARAND-SEARCH, BIPARTITION-SHIFT-UP, and BIPARTITION-SHIFT-DOWN operations to maintain the non-increasing order of values stored in $G_{i,1}s$.

Changing the gid of a channel $Ch_j$ from $g_1$ to $g_2$ is done as follows: find the triple $(M_i, MCH_i, MGID_i)$ such that $MCH_i = j$ and store i into $MAR_1$ and $(MDR,$ MCHR, $MGIDDR)$; $MGIDDR \leftarrow g_2$, and write back $(MDR,$ MCHR, $MGIDDR)$ using the address i in $MAR_1$.

Given a $DB'$, $t_s^{out}(DB')$, $t_e^{out}(DB')$, and a gid $g$, the scheduling of $DB'$ involves searches in $P_{M\text{-}ext}$ and $P_{G\text{-}ext}$. Searching in $P_{M\text{-}ext}$ is done as follows: find the smallest i such that $M_i < t_s^{out}(DB')$ and $MGID_i = g$. Searching in $P_{G\text{-}ext}$ is done as follows: find the smallest $i$ such that $G_{i,1} < t_s^{out}(DB')$, $G_{i,2} > t_s^{out}(DB')$, and $MGID_i = g$.

Similarly, associative processors $P_{G\text{-}ext}$ and $P_{G\text{-}ext}^*$ can be constructed by adding a gid comparand register MGGIDC, a memory MGGID of $m$ words $MGGID_1$, $MGGID_2$,, $MGGIDm$, and a data register MGGIDDR. $P_{MG\text{-}ext}$ is a combination of $P_{M\text{-}ext}$ and $P_{G\text{-}ext}$. The operations of $P_{MG\text{-}ext}$ can be easily derived from the operations of $P_{M\text{-}ext}$ and

$P_{G\text{-}ext}$ since the $P_{M\text{-}ext}$ items and the $P_{G\text{-}ext}$ items are separated. In $P^*_{MG\text{-}ext}$, the $P_{M\text{-}ext}$ items and the $P_{G\text{-}ext}$ items are mixed. Since the $MG_{i,1}$ values of these items are in non-decreasing order, finding the $P_{M\text{-}ext}$ item corresponding channel $Ch_i$ can be carried out by finding the smallest $j$ such that MGGID$_j$ = $i$.

Although the Detailed Description of the invention has been directed to certain exemplary embodiments, various modifications of these embodiments, as well as alternative embodiments, will be suggested to those skilled in the art. The invention encompasses any modifications or alternative embodiments that fall within the scope of the Claims.

**Claims**

1. An optical burst-switched router, comprising:

   an optical switch for routing optical information from an incoming optical transmission medium to one of a plurality of outgoing optical transmission media, each outgoing media able to transmit optical information over a plurality of channels;
   a delay buffer coupled to said optical switch for providing a plurality of different delays for delaying selected information between said incoming transmission medium and one of said outgoing optical transmission media;
   scheduling circuitry associated with each respective outgoing medium, comprising an associative processor for storing information on both unscheduled time for each channel on the respective outgoing medium and time gaps on each channel on the respective outgoing medium.

2. The router of claim 1 wherein said incoming optical transmission medium and outgoing optical transmission media comprise optical fibers.

3. The router of claim 1 wherein said scheduling circuitry includes an associative memory having a plurality of entries for storing a beginning value and an ending value for each instance of a time gap or unscheduled time.

4. The router of claim 3 wherein each entry has a channel value indicating an associated channel on said respective outgoing optical transmission medium.

5. The router of claim 3 wherein unscheduled time is stored in an entry as a beginning value indicative of the beginning of the unscheduled time and wherein the ending value is set to a predetermined value.

6. The router of claim 3 and further comprising a linear array of memory cells, each cell associated with a respective entry in the associative memory, wherein each cell indicates whether the respective entry is associated with either a time gap or with unscheduled time.

7. The router of claim 1 wherein said associative processor for each channel includes circuitry for searching through said entries of said associative memory.

8. A method of routing optical information through an optical burst-switched router including an optical switch for routing optical information from an incoming optical transmission medium to one of a plurality of outgoing optical transmission media, each outgoing media able to transmit optical information over a plurality of channels, and a delay buffer coupled to said optical switch for providing a plurality of different delays for delaying selected information between said incoming transmission medium and one of said outgoing optical transmission media, comprising the steps of:

   for each respective outgoing optical transmission medium, storing information on both unscheduled time for each channel and time gaps on each channel in an associative memory; and
   searching said associative memories for available periods to schedule an optical burst.

9. The method of claim 8 wherein said incoming optical transmission medium and outgoing optical transmission media comprise optical fibers.

10. The method of claim 8 wherein said storing step comprises the step of storing a beginning value and an ending value for each instance of a time gap or unscheduled time in an entry in said respective associative memory.

**11.** The method of claim 10 and further comprising the step of associating a channel value indicating an associated channel on said respective outgoing optical transmission medium with each entry.

**12.** The method of claim 10 wherein unscheduled time is stored in an entry as a beginning value indicative of the beginning of the unscheduled time and wherein the ending value is set to a predetermined value.

**13.** The method of claim 10 and further comprising indicating whether each entry is associated with either a time gap or with unscheduled time.

**14.** An optical burst-switched router, comprising:

   an optical switch for routing optical information from an incoming optical transmission medium to one of a plurality of outgoing optical transmission media, wherein each of the outgoing optical transmission media can transmit data over a plurality of channels;
   circuitry for assigning a group identifier to each channel;
   scheduling circuits each associated with a respective outgoing medium, each scheduling circuit comprising:

      one or more associative processors storing information indicative of times available for scheduling a data burst on said associated outgoing optical transmission medium; and
      circuitry for controlling said one or more associative processors to find an available time on one of a plurality of channels associated with a predetermined group identifier.

**15.** The router of claim 14 wherein said incoming optical transmission medium and said outgoing optical transmission media comprise optical fibers.

**16.** The router of claim 14 wherein said one or more of said channels are assigned a group identifier to identify the channels being tested.

**17.** The router of claim 14 wherein said one or more of said channels are assigned a group identifier to identify the channels as failed channels.

**18.** The router of claim 14 wherein said one or more of said channels are assigned a group identifier to identify the channels as reserved channels.

**19.** A method of routing information through an optical burst-switched router including an optical switch for routing optical information from an incoming optical transmission medium to one of a plurality of outgoing optical transmission media, wherein each of the outgoing optical transmission media can transmit data over a plurality of channels, comprising the steps of:

   assigning group identifiers for respective groups of one or more channels;
   scheduling data burst through said switch responsive to available time on one of a plurality of channels associated with a predetermined group identifier.

**20.** The method of claim 19 wherein said incoming optical transmission medium and said outgoing optical transmission media comprise optical fibers.

**21.** The method of claim 19 and further comprising the step of assigning a group identifier to a group of channels being tested.

**22.** The method of claim 19 and further comprising the step of assigning a group identifier to a group of failed channels.

**23.** The method of claim 19 and further comprising the step of assigning a group identifier to a group of reserved channels.

## FIG. 1a

4

OPTICAL SWITCHED NETWORK

6

8

10    12    10    12

12    12

10

6    12    8

12

10    10

10    10

12

10    10

6    8

## FIG. 3

44

PATH AND CHANNEL SELECTOR

ACK    CONFIGURATION INFORMATION

QUEUE

80

FROM SWITCH → 

82

BHP PROCESSOR → BHP Tx MODULE

46

42

DATA CHANNEL
SCHEDULING
MODULE

CONTROL CHANNEL
SCHEDULING
MODULE

84    SCHEDULER    86

EP 1 217 863 A2

BHP

SCHEDULER

60

ENOUGH TIME TO SCHEDULE? — NO

YES

62

DATA BURST SCHEDULED? — NO

YES

64

BHP SCHEDULED ? — NO

YES

66

DATA BURST DELAY > 0? — NO

YES

PATH AND CHANNEL SELECTOR

RB CHANNEL IN AVAILABLE? — NO

68 YES

RB CHANNEL OUT AVAILABLE? — NO

70 YES

DISCARD BHP AND DATA BURST

65

RB SWITCH CONTROLLER

SPATIAL SWITCH CONTROLLER

FIG. 2

FIG. 4a

FIG. 4b

FIG. 5

91

| | UNSCHEDULED TIME | CHANNEL ID |
|---|---|---|
| 0 | $t_0$ | $H_0$ |
| 1 | $t_1$ | $H_1$ |
| 2 | $t_2$ | $H_2$ |
| 3 | $t_3$ | $H_3$ |
| 4 | $t_4$ | $H_4$ |
| 5 | $t_5$ | $H_5$ |
| 6 | $t_6$ | $H_6$ |
| 7 | $t_7$ | $H_7$ |

*FIG. 6*

93

| | START TIME | ENDING TIME | CHANNEL ID |
|---|---|---|---|
| 0 | $\ell_0$ | $r_0$ | $H_0$ |
| 1 | $\ell_1$ | $r_1$ | $H_1$ |
| 2 | $\ell_2$ | $r_2$ | $H_2$ |
| $\vdots$ | $\vdots$ | $\vdots$ | $\vdots$ |
| G-2 | $\ell_{G-2}$ | $r_{G-2}$ | $H_{G-2}$ |
| G-1 | $\ell_{G-1}$ | $r_{G-1}$ | $H_{G-1}$ |

*FIG. 7*

FRAME CLK →

120 — $P_T$ [ T ]

121

$c^f$ $c^f_1$

INPUT: $t_{DB}$ → CP$_2$ ~122

86

*FIG. 9*

OUTPUT: POSSIBLE BHP
DEPARTURE TIMES ON CC AT
$t_{DB}$, $t_{DB}+L_1$, $t_{DB}+L_2$

*FIG. 10*

121

| | FRAME NUMBER OF BHP SCHEDULED |
|---|---|
| 63 | $B_{63}$ |
| 62 | $B_{62}$ |
| ⋮ | ⋮ |
| 2 | $B_2$ |
| 1 | $B_1$ |
| 0 | $B_0$ |

*FIG. 8*

DB DEPARTURE TIME $t'_{DB}$, LENGTH $1_{DB}$

$i = 0$ —100

FIND A GAP IN $P_G$ TO TRANSMIT THE DB AT $t'_{DB}+Q_i$ —102

104 SUCCESS?

YES → STORE THE $P_G$ ENTRY INDEX, THE FDL IDENTIFIER i, AND THE SELECTED DATA CHANNEL IDENTIFIER —105 → STOP

NO

106 FIND AN UNSCHEDULED CHANNEL IN $P_M$ TO TRANSMIT THE DB AT $t'_{DB}+Q_i$

SUCCESS? YES → STORE THE $P_M$ ENTRY INDEX, THE FDL IDENTIFIER i, AND THE SELECTED DATA CHANNEL IDENTIFIER —109 → STOP

NO 108

$i = i+1$ —110

NO i > B? YES

112

REPORT THAT THE DB CANNOT BE SCHEDULED —114

STOP

130 COMPARE, IN PARALLEL, $E_{t-j}$, $0 \leq j \leq J-1$ TO DETERMINE IF THERE IS SPACE FOR BHP

134 CHOOSE SMALLEST INDEX; STORE INDEX; REPORT THAT FRAME HAS BEEN FOUND FOR SENDING BHP ← YES — ENTRY AVAILABLE?

NO 132

SEND NACK —136

*FIG. 11*

*FIG. 12*

SPATIAL SWITCH CONTROLLER —30

44

CONFIGURATION INFORMATION

TO SCHEDULERS

FROM SCHEDULERS

146

QUEUE

PROCESSOR

CONFIGURATION INFORMATION

140

RB SWITCH CONTROLLER

28

142

RECIRCULATION BUFFER IN SCHEDULING MODULE

144

RECIRCULATION BUFFER OUT SCHEDULING MODULE

PATH AND CHANNEL SELECTOR

148c   148a   26   148a

148b   148b

←D→

▨ DELAY D — DROPPED

▧ DELAY 2D

*FIG. 13*

OCCUPIED BY BHPs   SEGMENT MEMORY POINTER

FRAME PAYLOAD

0   —150

1   —150

⋮

WRITE

i

⋮

$W_c-1$   —150

$P_c$   READ

*FIG. 14*

FIG. 15

EP 1 217 863 A2

SLOT CLK →

90a    92a         90b    92b

$P_{M1}$   $P_{G1}$      $P_{M2}$   $P_{G2}$

94

INPUT: $t_{DB}$, $1_{DB}$, FDL OPTIONS

$CP_3$

OUTPUT: ELEGIBLE BUFFER CHANNELS

*FIG. 16*

$DB_1$      $DB_4$      $DB_2$

$CH_1$        TIME

GAP    $t_1$

$DB_3$

$CH_2$        TIME

$t_2$

$DB_4$

TIME

$t'$

$t_0$

*FIG. 17a*

$DB_1$      $DB_2$

$CH_1$        TIME

GAP    $t_1$

$DB_3$    $DB_4$

$CH_2$        TIME

$t_2$

$DB_4$

TIME

$t'$

$t_0$

*FIG. 17b*

*FIG. 18*

$CLK_S$

$CLK_f$

*FIG. 19a*

202 — MC

200 — SUBTRACTOR → MFLAG$_i$

M$_i$ — REGISTER

*FIG. 19b*

91

202 — MC

COMPARATOR → MFLAG$_i$

204

M$_i$ — DECREMENT COUNTER ← CLK$_s$

*FIG. 20*

90

202 — MC

M$_1$

M$_2$

91

218 — MAR$_1$

220 — MAR$_2$

M$_k$

222 — MDR

MCH

MCH$_1$

MCH$_2$

216

MCH$_k$

MCHR — 224

*FIG. 21*

230

GC | GC$_1$ | GC$_2$

93

G$_1$ | G$_{1,1}$ | G$_{1,2}$

G$_2$

234 — GAR

240 — GR$_1$

242 — GR$_2$

G$_n$ | G$_{n,1}$ | G$_{n,2}$

G

92

GDR | GDR$_1$ | GDR$_2$

236

GCH

GCH$_1$

GCH$_2$

232

GCH$_n$

GCHR — 238

FIG. 22

FIG. 23

FIG. 24

202 — MC    MCHC    MGIDC — 292

290

91 — $M_1$   $MCH_1$   $MGID_1$
$M_2$   $MCH_2$   $MGID_2$

218 — $MAR_1$

220 — $MAR_2$    216    294

$M$   $MCH$   $MGID$

$M_r$   $MCH_r$   $MGID_r$

222 — MDR    MCHR — 224    MGIDDR — 296

*FIG. 25*

300

230    302

GC | $GC_1$ | $GC_2$    GGIDC — 302

$G_1$ | $G_{1,1}$ | $G_{1,2}$   GCH   $GGID_1$
$G_2$ |   |     $GCH_1$   $GGID_2$
93    $GCH_2$

234 — GAR    304

$G$   GCH   GGID

$G_n$ | $G_{n,1}$ | $G_{n,2}$   $GCH_n$   $GGID_n$

GDR | $GDR_1$ | $GDR_2$   GCHR   GGIDDR — 306

236

*FIG. 26*